**Europäisches Patentamt**

**European Patent Office**

**Office européen des brevets**

(19)

(11) Publication number: **0 089 029**
**A2**

(12) # EUROPEAN PATENT APPLICATION

(21) Application number: **83102425.2**

(22) Date of filing: **11.03.83**

(51) Int. Cl.³: **C 08 L 89/06**

(30) Priority: **12.03.82 US 357450**

(43) Date of publication of application:
**21.09.83 Bulletin 83/38**

(84) Designated Contracting States:
**DE FR GB IT**

(71) Applicant: **AMF INCORPORATED**
**777 Westchester Avenue**
**White Plains New York 10604(US)**

(72) Inventor: **Picagli, Raymond G.**
**496 Wood Hill Road**
**New Haven, Connecticut(US)**

(72) Inventor: **Tucker, E. Scott**
**46 Columbus**
**Stamford, Connecticut(US)**

(72) Inventor: **Infantino, Joseph R.**
**15 Seneca Drive**
**Chappaqua, New York(US)**

(72) Inventor: **Light, Herbert J.**
**11 Blake Street**
**Fairfiled, Connecticut(US)**

(72) Inventor: **Marinaccio, Paul J.**
**107 Forest Road**
**Monroe, Connecticut(US)**

(72) Inventor: **Fiore, Joseph V.**
**205 Steiner Street**
**Fairfield, Connecticut(US)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Reconstituted leather product from fibrillated leather fibers.**

(57) A reconstituted leather product is produced from fibrillated leather fibers. The highly preferred leather product is prepared by a process which includes dry chopping pieces of chrome tanned leather, wet fibrillating the resulting dry chopped leather so as to realize an aqueous slurry containing the fibrillated leather fibers, mixing the slurry with an ethylene-vinyl acetate copolymer binding agent, and optionally, a fat liquoring agent, felting the resulting slurry, removing the remaining water to realize a dried felt having 80-90% solids, and final pressing the felt at a temperature sufficient to fuse the binder.

./...

EP 0 089 029 A2

FIG. 1

*I*

# RECONSTITUTED LEATHER PRODUCT

# FROM FIBRILLATED LEATHER FIBERS

## RELATED APPLICATION

This application is a continuation-in-part of U.S. Serial No. 357,450 filed on March 12, 1982, now _____, the entire disclosure which is incorporated herein by reference.

## BACKGROUND OF THE INVENTION

I. FIELD OF THE INVENTION

This invention is relates to reconstituted leather and in particular reconstituted leather containing fibrillated leather fibers.

2. PRIOR ART

The concept of preparing a reconstituted leather by forming leather scraps into a usable sheet is well known. The processing of hides into leather produces a large degree of scrap material which can be used for this purpose.

Typically salt cured hides are converted into leather at tanneries. A single hide will usually eventually yield about 44 square feet of a finished grain leather. At the tannery, unwanted hide components are first removed by a series of washing, cutting and chemical treatments. Water, detergents, disinfectants, lye and enzymes capable of breaking down specific proteins are used to remove salt, dirt, bacteria, hair, fat and all proteins except

2

the collagen fibers which are the major structural component of leather. Any flesh attached to the hide is removed and the hide is cut into two sides for ease of handling, each of which will usually eventually yield about 22 square feet of grain leather.

The hides are then tanned by treatment with mineral salt, e.g. chromium sulphate, and/or natural/synthetic organic tanning agents which results in cross-linking between neighboring protein chains. The cross-linking or tanning process causes a stabilization of the hide protein against bacterial decomposition and decay as well as contributing to the physical characteristics of the leather such as strength and elongation.

The tanned side of the leather is then split into two layers, each of which provides about 22 square feet of the desirable "grain" layer which is used in most premium leather goods, and about 7 square feet of a "split" layer which is used in some suedes and workgloves. The splitting process does not provide materials having a precise thickness and, therefore, the layers are cut thicker than desired and the excess thickness is shaved off resulting in waste leather or tanned shavings. The "split" layer is also trimmed and shaved to a desired thickness which results in additional waste. The total waste is about 2 pounds (dry) per side and it is estimated that the annual waste of the chrome tanned leather shavings in the United States is approximately 70 million pounds.

3

The leather is then dyed to any desired color and "fat liquored". The latter operation involves the addition of fats or oils to lubricate the leather and impart desired characteristics. The leather product is then dried, rehumidified and "staked". A staking machine is used to repeatedly jab the leather with many rods or stakes in order to break some of the leather fibers and produce a product with more pliability and improved feel or "hand". This leather may be finished with various combinations of waxes, lacquers, pigments and embossing to produce a range of leather finishes.

Natural leather has high strength, high elongation and exceptional resistance to tear or burst as a result of its fibrous structure. It has good water vapor transmission permitting it to be used in shoes and upholstery. The properties of leather are due largely to its network of collagen fibers, each containing many chains of protein molecules oriented and bonded together. The fiber strength and stability of the protein structure is due to internal hydrogen bonding and electrostatic bonding between positive and negative groups on adjacent protein chains which bond and pack together to form fibrils and, in larger groups, fibers which intertwine in random fashion.

There have been numerous approaches to preparing reconstituted leather sheet, including processes which employ some of the techniques used in the paper and cardboard industries. These procedures can be generally classified in five groups.

4

The first group involves those processes in which leather, with or without other materials, is finely comminuted and handled through conventional paper and board making machinery without added binders. The second group of processes generally follows the method of the first group and adds conventional proteinaceous binding materials such as glue, casein, blood or hydrolyzed leather to the leather material which is then formed under heat and pressure into a sheet. In the third class, leather fibers, alone or admixed with other fibers, are worked into a dough form with various mastics such as rubber, resin, rosin, oil, grease, bitumin, and the like followed by molding into the desired sheet.

Leather fibers, in the fourth group of processes, with or without other fibers, are formed into a porous felt, which is dried and then saturated with solutions or emulsions of rubber, resin, waxes or similar materials. The fifth class of processes involves the use of leather fibers, with or without other fibrous extenders as a fibrous reinforcement for plastic sheeting made from various plastic materials such as polyvinylchloride.

All of such prior processes for preparing a reconstituted leather sheet suffer from various disadvantages. The felts of the first group have a very low resistance to tearing or rupturing because of short fiber length and absence of the fiber interlocking found in natural leather. Addition of a size or binder as in the second group does not correct these defects but produces a stiff sheet which is incapable of being bent at a sharp angle.

5

Additionally, the products of the second group are characterized by poor resistance to tearing and resemble dry, untanned and unplasticized hide. The products of the third group contain more mastic or plasticized binders and fiber and are usually expensive. The products of the fourth and fifth groups are essentially fiber reinforced plastic sheeting and in addition to being expensive, they are characterized by the feel and texture of such sheeting. The continuous resin film renders the products impervious and they do not "breathe" as does leather.

Illustrative of patents relating to the making of reconstituted leather are:

Dimiter, U.S. 4,287,252, uses a dry process to prepare a reconstituted leather by pulverizing the leather to form a fine powder which is then treated to polarize the particles and form them into aggregates which are intermixed with a resinous binder such as ethylene-vinyl acetate copolymer, acrylate copolymer or acetoxylated polyethylene.

Forward, U.S. 2,808,398, prepares leather dust by soaking tanned or cured leather to effect hydrolyzation, drying the resulting mass, pulverizing the mass to a screen size of about 5/8 inch by means of a hammer mill to yield the dust which can be mixed with a material such as polyvinyl acetate.

Clapp, U.S. 1,131,039, teaches a process of making a leather board by cutting up chrome scrap in the absence of moisture and mixing the resulting product with ordinary scrap in a beater.

6

Wilson, U.S. 2,158,265, prepares a leather pulp and teaches thoroughly drying chrome tanned leather, comminuting the leather in a rag beater in the presence of water, and then forming the resulting material into a sheet.

None of these aforementioned references teach fibrillated leather fiber, its use to produce a reconstituted leather product or the ability of the reconstituted leather product produced to withstand and benefit from staking.

The most relevant reference known to Applicants is U.S. Patent No. 3,116,200 to Young. Young produces a reconstituted leather product by following the practices in the cardboard and paper industries with various modifications, together with the use of a particular bonding resin, namely polyvinyl acetate, and certain plasticizers. Mineral tanned leather pieces are suspended in water and passed through a milling zone where they are subjected to a brief but intense rubbing or shearing action by closely spaced and serrated surfaces. Young states:

> "The leather is placed in a slurry or fibrous stock form
> in a short interval of time requiring only a few
> seconds, generally under ten seconds of the intense
> milling is adequate. Prolonged milling of the leather
> is principally responsible for the hydration of the
> fibers and should be avoided for the best results." (Col.
> 3, lines 15-20 and see also Col. 6, lines 25-43).

7

The polyvinyl acetate resin and plasticizer are introduced into the resulting slurry which is then felted, draining off most of the water, to form a fibrous mat. The mat is generally cold pressed to remove more of the water and the cold pressed felt is then dried to further adjust the moisture content. Thereafter, the felt is hot pressed to activate the polyvinyl acetate and the sheet can thereafter be subjected to further finishing. Preferably, anionic surfactants such as sulfated fatty materials are added to the stock prior to felting to improve the felting of the slurry. The binder must be polyvinyl acetate which may be mixed or copolymerized with polyvinyl chloride, polyvinyl alcohol, polyvinylidene chloride, polyacrylic acid, polyacrylamide, polyacrylonitrile, styrene-maleic anhydride or the like as long as the polyvinyl acetate is the major portion of the resin used as the binder.

Young has many disadvantages. Common resins such as the formaldehyde resins and conventional proteinaceous materials such as glue, gelatin, blood, casein and the like, latices of synthetic and natural rubbers, polyvinyl chloride, polyvinylidene chloride, polyamides, polyethylene and polyisobutylene resins are not satisfactory in Young, although they can be used in small amounts as an adjunct to the polyvinyl acetate resin. Additionally, the product of Young is a sheet with low elongation and a stiffness which is several times that of natural leather. The plasticizers used in Young provide only a slight softening, significantly reduce the sheet's tensile and tear strength and also

8

tend to migrate from the sheet with the passage of time. Further, Young does not teach staking the reconstituted leather product produced. Applicants' testing indicates that Young's product cannot be staked without destroying the product. Most significantly, however, Young explicitly states that prolonged milling should be avoided. Applicants produce the fibrillated leather composition of their invention by prolonged and/or repeated milling, completely contrary to the teaching of Young.

Processes also exist for making an artificial product without any leather fibers; for example, Haack, U.S. Patent 3,984,597, discloses a leather textile substitute material which is a cellular porous unsupported sheet of a foamed polyethylene or ethylene-vinyl acetate copolymer or various mixtures thereof.

Other U.S. patents of interest are:

3,122,599 to Tu et al;

3,223,551 to Tu; and

3,345,201 to Crowell.

Still further, to Applicants' knowledge the fibrillated, i.e. highly refined, leather composition used to produce the novel reconstituted leather product of this invention is novel.

9

## OBJECTS AND SUMMARY OF THE INVENTION

It is an object of this invention to produce fibrillated leather fibers which are useful in the production of a reconstituted leather product.

It is another object of this invention to provide a novel reconstituted leather product which simulates the characteristics, feel, softness and hand of natural grain leather.

It is also an object of this invention to provide a process which uses a large proportion of leather scrap waste in an economical fashion to provide a simulated leather product.

This invention is directed to a reconstituted leather product, the method by which it is prepared and the novel fibrillated fibers used therein. More particularly, it relates to a reconstituted leather product which is prepared by wet fibrillating to realize an aqueous slurry of fibrillated leather fiber, preferably mixing the slurry with binder and, optionally, a fat liquoring agent, felting the resulting slurry, removing the remaining water to realize a dried felt and final pressing the felt at a temperature sufficient to fuse the binder.

The process produces a novel reconstituted leather composition consisting essentially of fibrillated leather fibers, preferably bonded together by a binding amount of an effective binder.

*10*

## BRIEF DESCRIPTION OF FIGURES

FIG. I is a flowsheet of the process according to the present invention.

FIG. IA is a schematic diagram of a preferred pilot plant used to produce the fibrillated leather fiber composition and the felted product from which the leather product is made.

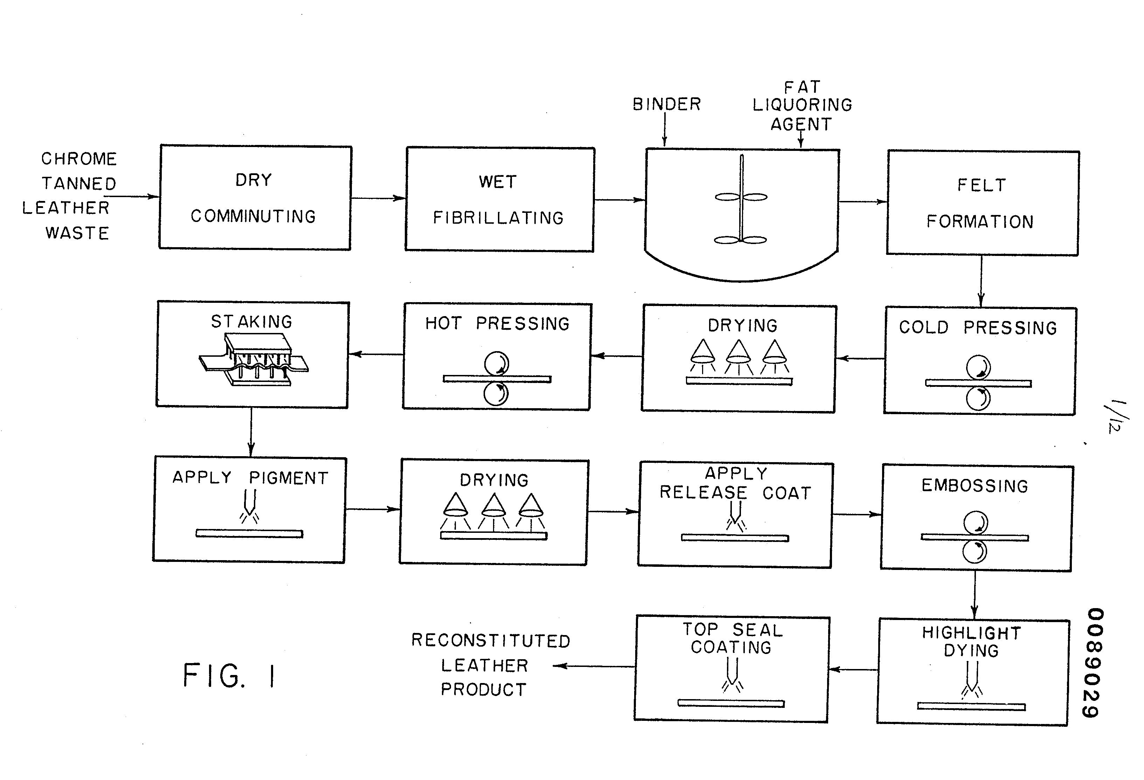

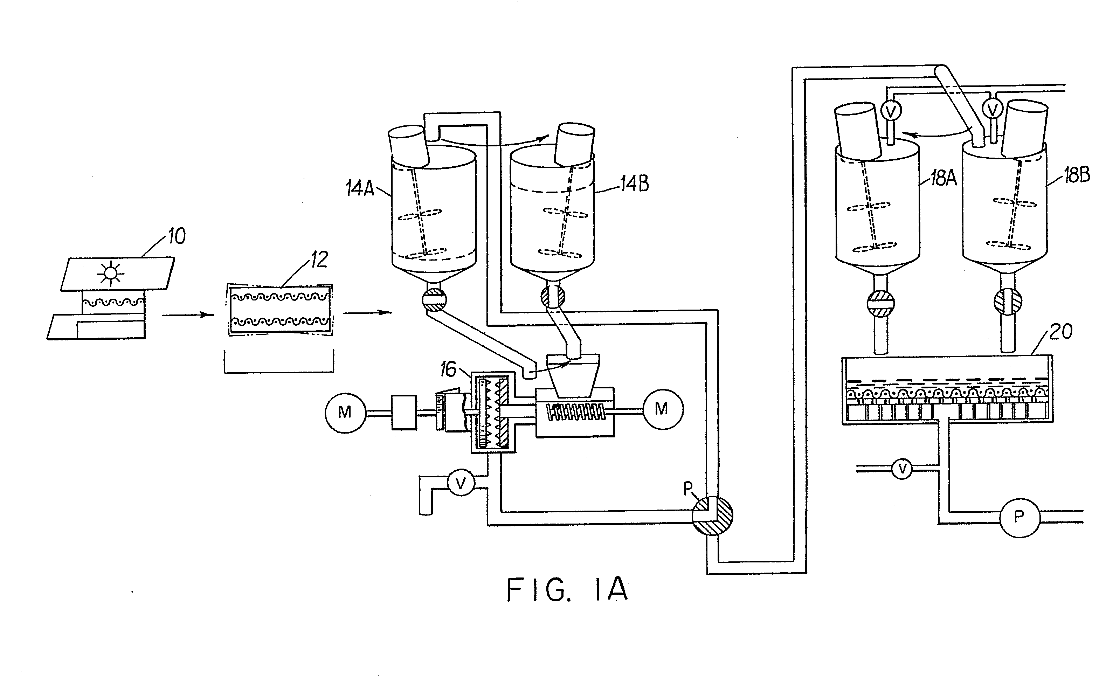

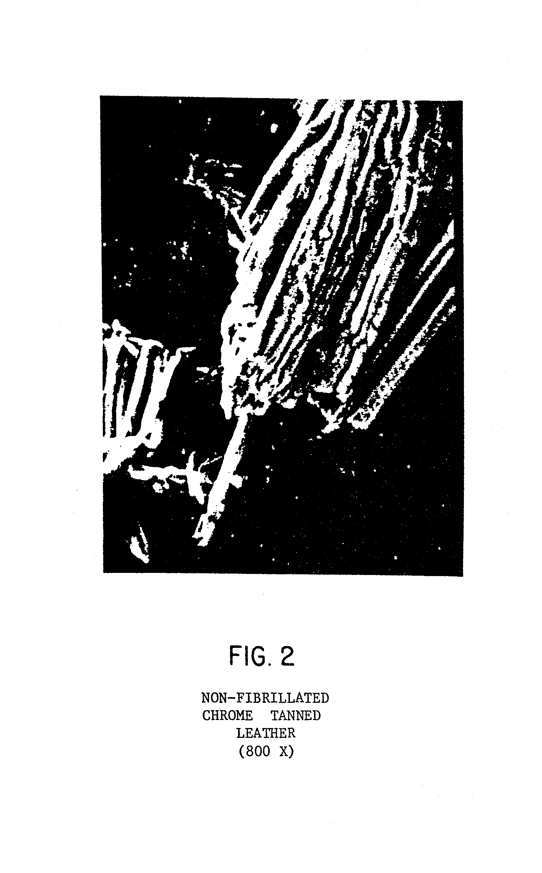

FIG. 2 is a scanning electron micrograph (SEM) of non-fibrillated chrome tanned leather fibers.

FIG. 3 is an SEM of chrome tanned leather fibers fibrillated pursuant to this invention.

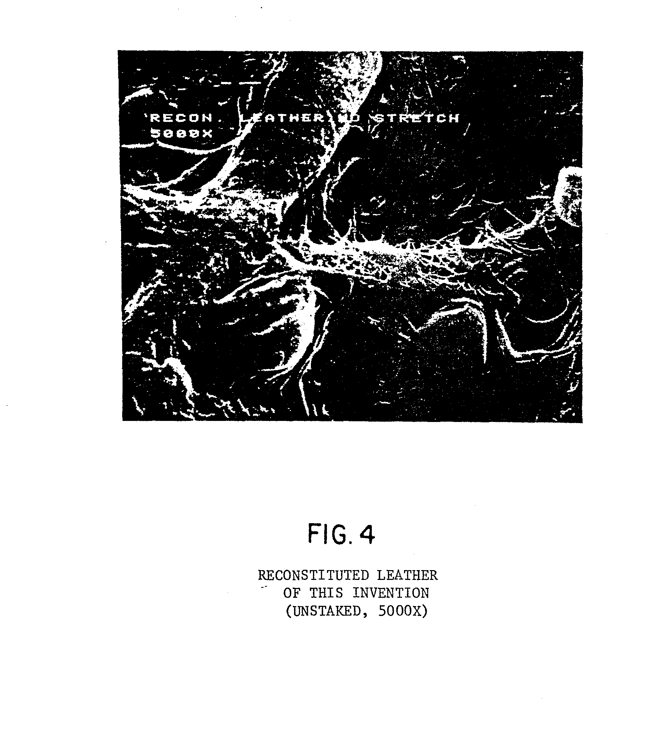

FIG. 4 is an SEM of the reconstituted leather product of this invention, unstaked.

FIGS. 5 through 18 are graphs of Canadian Standard Freeness (CSF) of fibrillated leather fiber compositions versus the number of passes through the refiner, felting times, sheet tensile strength, elongation and 1% modulus. The tests performed to produce these graphs clearly demonstrate the unexpected results obtained by the use of fibrillated leather fiber in a reconstituted leather product.

11

## DETAILED DESCRIPTION OF THE INVENTION

In the first step of the process for producing a reconstituted leather product, leather scrap or waste, preferably mineral, e.g., chrome, tanned leather scrap or waste, is dried, if necessary, so that it contains less than about 60%, preferably less than 40% moisture, and most preferably less than about 10% moisture. The scrap is then dry milled, chopped or comminuted under ambient conditions in a suitable apparatus such as a hammer mill, rotating knife or the like. As a result of this procedure, chopped leather fibers which pass through a ¼-inch mesh screen are obtained. The resulting chopped leather is then slurried in water to a concentration of about 2-15%, preferably about 2-12%, and most preferably about 2-4% in preparation for the wet fibrillating step which follows. Optionally or admixed therewith, organic natural/synthetic tanned leather, e.g. vegetable tanned leather, scrap or waste may be processed in the same manner.

In the wet fibrillating step, the slurry is passed into a fibrillating zone in which it is subjected to an intense and prolonged rubbing or shearing action by closely spaced surfaces. A twin disc, optionally pressurized, fiberizer made by Sprout-Waldron (SW) has been found suitable for this purpose. The wet fibrillating is continued until the product has a Canadian Standard Freeness of about +100 ml to -800 ml., preferably past or less than the inversion point, i.e. about 0.ml. CSF. A preferred range is

12

about -100 ml to about -300ml. The amount of time required to achieve the desired Canadian Standard Freeness varies depending upon the concentration of the dry chopped leather in the slurry and other parameters and is generally about .1 to 5 hours and preferably about ½ to 2 hours. A material with the desired Canadian Standard Freeness has the proper degree of fibril formation with a minimal amount of fibril breakage for production of the reconstituted leather product. Canadian Standard Freeness (CSF) and fibril formation are well known terms of art applicable to wood pulp, see for example, Osborn, U.S. Patent No. 3,125,098 and Hou et al, U.S. Patents Nos. 4,305,782 and 4,309,247, Beitrage Zur Tabakforschung Band 8. Heft 5, March 1976 "Identification of Cellulose Fibers From Reconstituted Tobacco," Casey and Fiore; The entire disclosures of these references are incorporated herein by reference.

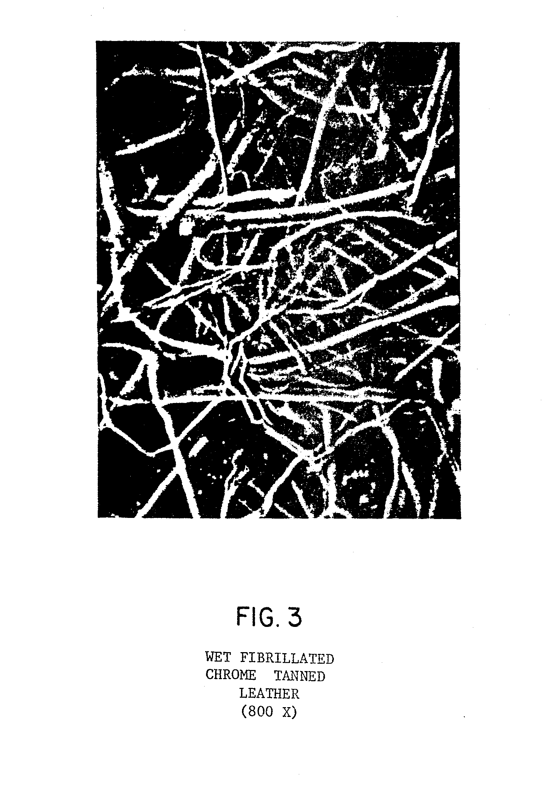

By the term "fibrillated", or words to that effect, is meant fibers having minute threadlike elements extending and/or detached therefrom. The leather fiber composition of this invention is considered to be "fibrillated" when the CSF is +100 ml or less. A typical fibrillated leather fiber composition is depicted in Fig. 3. It is believed that the fibrillated leather fibers provide a high degree of entanglement and surface area, which increases the reinforcing effect of the fibers and thus increase tensile strength and elongation. Optionally, other type and size fibers may be admixed with the fibrillated leather fibers to impart

13

desirable properties to the leather product, e.g. tear resistance and stitch retention. For example, natural fibers, (e.g. cotton linter) or synthetic fibers (e.g. polyester, nylons, acrylates etc.) may be admixed with the leather fibers.

After the fibrillated leather fiber composition is produced, the slurry is diluted with additional water in order to achieve the proper consistency required for vacuum felting sheet formation. This latter consistency will vary depending on the type of equipment used to form the sheet and typically is in the range of about .1-3.0% solids, preferably about .25 to 1.5% solids.

In the next step of the process of this invention, the binder is added to the slurry. The preferred binder employed is an ethylene-vinyl acetate resin in an amount, preferably, of about 10%-40% based on the weight of the total dry solids of the slurry, most preferably about 30%. The ethylene-vinyl acetate resin is added to the slurry in the form of an aqueous emulsion which can contain about 20% to 75% resin, preferably about 50% to 60% resin. The ethylene-vinyl acetate resin utilized in this invention is a copolymer containing about 30% to 50% by weight of acetyl, having a density of about 0.92 to 0.96g/cm$^3$ and having a glass transition temperature of about +10 to -30°C. Such ethylene-vinyl acetate copolymers are commercially available and one example thereof is Airflex-401 sold by Air Products and Chemicals, Inc.

Other binders may be used with the fibrillated leather composition to form the leather product of this invention. The

14

binder utilized is typically a film former which imparts enhanced flexibility and enhanced elongation to the fibrillated leather fibers. The amount of binder utilized is a binding amount. Optionally, however the binder may be completely omitted and a leather product produced by the subsequent steps described herein which has sufficient tensile strength, tear strength, elongation and 1% modulus to be considered an acceptable leather product for certain uses.

Other specific types of binders that have been used to form the leather products of this invention are as follows;

poly butadiene-acrylonitrile

polyether-urethane

polyester-urethane

polychloroprene

polyacrylic

polyvinyl alcohol

polyvinyl acetate

polyvinyl acetate-acrylic copolymer

polystyrene-butadiene

polymethyl siloxane

Other type binders may include polyvinyl-chloride, polyisoprene (natural rubber), polyvinylidene chloride and fluoride, and epoxys.

In order to lubricate or plasticize the leather fibers in the final reconstituted leather product, it is also preferred to add to

15

the slurry, i.e. fibrillated leather fiber composition, a conventional fat liquoring agent in an amount of about 1% to 50% by weight based on the weight of the leather in the slurry. Any conventional fat liquoring agent can be used and examples include those materials sold under the trademarks Dymsol-S, Tanyol-MB (Diamond Shamrock Corp.), Atlasol-160-S, Eureka-102 (Atlas Refining, Inc.), and Catalix GS and T (Sandoz Co.). The fat liquoring agent can be added to the slurry before, after or at the same time as the binder, preferably after binder addition. Although not preferred, the final reconstituted leather product may also be treated with fat liquoring agents. After mixing of the binder and fat liquoring agent, the slurry will contain, as solids, about 60% to 90% of the refined leather scrap, about 10% to 40% of the binder and about 1% to 50% of fat liquoring agent.

The slurry is deposited on a foraminous surface, for example a 100 mesh screen, and vacuum felted, for example, under a vacuum of 20-25 inches of mercury. Any of the felting equipment used in the manufacture of felts for subsequent processing into paper, hardboard, pasteboard, and the like can be used. Optionally the foraminous surface may be a reinforcing scrim mesh or fabric which becomes an integral part of the leather product. This scrim, mesh on fabric may be used to impart desired tear strength to the product.

Fig. IA is a schematic diagram of a preferred pilot plant used to produce the fibrillated leather fiber composition and felted product used to produce the reconstituted leather product of this invention. Leather, preferably leather scrap is fed into a chopping device (10) to reduce the size of the leather to a uniform size. The leather is then fed to a sifter (12) to separate the oversized material from the desired size material. Typically a quarter inch screen is used to sift the material. The oversized material is fed back to the chopper (10) so that it may be rechopped and again passed through sifter (12). The sifted material is then slurried with water in tanks 14A or 14B. The slurry is fed from one tank, e.g. 14B, through refiner (16) and then pumped into the other tank, e.g. 14A. This process is then repeated numerous times until the desired fibrillated leather fiber composition is obtained. The refiner (16) used in the preferred pilot plant of this invention is a disc refiner, in particular, a Sprout-Waldron refiner and in particular a Sprout-Waldron refiner with a 12 inch single disc operated at a fixed speed of about 2600 rpm. The plate pattern is Number 12716-A/AA, NI-hard, closed periphery with sub-surface dams. The average slurry feed to the refiner is about 9 to 15 pounds per minute of slurry.

The fibrillated leather fiber is then pumped into tanks 18A and/or 18B and continuously mixed with water and binder and other process aids described herein. This composition is then poured into felting box (20) and felted into sheets.

An alternate method of felting or sheet forming is to utilize a continuous paper machine or web forming apparatus.

As a result of the felting process, a sheet is formed with an increased solids concentration of about 25% to 40%, preferably about 30%. Additional water is then removed from the felt, preferably by pressing and drying. The pressing may be effected by hydraulic pressing between large flat surfaces or running the felt through squeeze rolls with the pressure applied and the rate at which it is applied correlated to the felt freeness to extract water without damage to the felt. This pressing step can be accomplished at any temperature below that at which the binder fuses. Typically pressing is effected by pressing between platens set at a pressure of about 25 to 500 psi for 30 to 300 seconds in order to realize a sheet which contains about 40 to 50% solids, most preferably about 45% solids. Pressing may also be assisted by vacuum conditions.

Preferably, the sheet is then dried using a combination of time and temperature conditions which do not cause the binder to fuse. For example, drying can be effected by allowing the felt to stand at ambient temperature for about 16 hours or the felt can be placed into a 176°F oven for 15 minutes. The drying is continued until the felt has an increased solids concentration of about 80% to 90%, preferably about 85%.

The resulting sheets are then subjected to a hot pressing in order to cause the binder, preferably ethylene-vinyl acetate, in the sheet to fuse into a matrix which bridges and reinforces the network of fibrillated leather fibers. The particular time and

18

temperature will depend on the specific binder employed and the decomposition point of the fibrillated leather fibers. Typically the pressing is effected at a sheet temperature of about 80°F to 220°F, preferably about 175°F to 190°F for a period of time which can vary from about 30 seconds to about 600 seconds, preferably about 60 to 180 seconds and at a pressure of about 25 to 500 psi, preferably about 25 to 100 psi. If a reconstituted leather product is produced without binder the foregoing temperatures and pressures are sufficient to consolidate the fibrillated fibers to form a satisfactory reconstituted leather product.

In order to achieve a product with the optimum strength, pliability and feel of leather, the resulting reconstituted leather sheet is preferably staked in a conventional manner well known in the leather art. Conventional leather staking machines, such as "Molissa", and continuous vibration staking machines (Investa Ltd. Praha Czechoslovakia) are used to repeatedly jab the sheet with many rods or stakes in order to stretch and /or break up some of the fibers and binder.

If staking is not performed on the reconstituted product, a soft, pliable reconstituted leather product can be obtained with leather scrap which has been less highly refined or fibrillated. However, it will not have optimum strength. Such a product may still be suitable for certain uses. It has been found that the reconstituted leather product of the aforementioned Young patent cannot be staked without detrimentally affecting tensile strength

19

and/or tearing the sheets. One of the unique properties of leather which is also demonstrated by the preferred leather product of this invention and which is not demonstrated by other type reconstituted leather products, e.g. Young, is that the "hand" of the product improves with mechanical working.

After staking, the surface of the reconstituted leather may have a conventional leather pigmented coating applied to it and dried in the normal manner. The pigmented sheet may then be embossed by first applying a release coating to the surface and then passing the sheet through embossing rolls. A highlight dye coating may then be applied to the surface of the reconstituted leather sheet and a conventional leather top sealer coating applied in the same manner as in the processing of grain leather.

The aforementioned process for producing the leather product may be accomplished in a batch, semi-batch or continuous type process.

It has been found that reconstitued leather product of this invention has a high degree of formability. Such forming can be achieved by various combinations of heat, pressure and time and is useful for the fabrication of complex curvatures from flat sheets by embossing of deep surface textures thereon.

There are several ways of forming the reconstituted leather sheet or engineered leather sheet into desired shapes. For example, a sufficient quantity of fibrillated leather fiber composition (including binder and other ingredients) may be felted

2c

or flocked onto a formed belt, mandrel or porous shape to form a film of between a few thousandths of an inch to a quarter of an inch. The formed sheet is then taken off and the form subsequently consolidated by pressure and heat. This could be called wet or pulp forming. Optionally, a felted flat sheet can be put into a mold and pressed out into a three dimensional configuration. A third way of forming the sheet into a desired shape is to take a flat sheet of the reconstituted leather product of this invention containing a binder which is amenable to bending, forming and flowing under the influence of heat and pressure, and to so form the sheet. For example, a flat sheet of reconstituted leather product has been formed into a compound curvature of a portion of a basketball and football in this manner. Not only can the curve be formed but a pebble grain may be simultaneously placed thereon. This reduces significantly the labor required in taking a flat sheet and trying to conform it to, for example, a spherical configuration to make a basketball.

More specifically, panel-leather inflatable balls are presently made by hand pressing (stitching) flat, pre-embossed leather panels against an inflated ball carcass. In most cases both the carcass and the back of the panels are precoated with an adhesive. In a final step the carcass with applied panels is pressurized against the inner surface of a cold mold to further achieve intimate panel-to-carcass contact. The hand stitching operation is tedious, time-consuming and costly since a flat panel

21

must be coaxed, bent, stretched, compressed etc. to a spherical configuration. Thus the leather product of this invention permits (a) shortening and simplifying hand stitching and (b) providing novel means for producing inflatable balls from reconstituted leather. Many of the methods described below have been successfully tried; others are deemed possible and practical.

Method 1  Pre-textured reconstituted leather panels are inflation-pressed against the inner smooth surface of a 140°F to 160°F mold at 100 psi for 1 minute. The resulting curved panels retain their texture and, due to the curvature, can be hand stitched to a carcass in substantially less time than flat panels.

Method 2  Smooth panels are inflation pressed against the inner textured surface of a 225°F to 250°F mold at ca. 135 psi for 3 minutes followed by several minutes cooling. This attains the benefits of Method 1 and additionally eliminates the need for pre-embossing. If necessary to provide proper mold registry, the panels may be held in the mold by vacuum.

Method 3  The procedure of forming panels of Method 1, hand positioning said panels on a carcass and final "stitching" and texturing in a hot mold as in Method 2.

Method 4  Positioning flat (or pre-curved if necessary) smooth panels having adhesive on their inner sides in a textured mold. Holding said panels with vacuum, applying heat and pressure to a carcass as in Method 2 to accomplish stitching, embossing and final pressing in one step.

*22*

Method 5  All of the above in which panels are contiguous, 2, 3 or 4 panels per piece.

After the leather product of this invention is produced it may be coated, laminated to other materials, embossed, dyed and utilized in any manner in which natural leather and synthetic leathers have been used.

The aforementioned procedure uses a large proportion of leather scrap waste in an economical fashion to provide a reconstituted leather which simulates the characteristics, feel, softness and hand of natural grain leather and has additional desirable properties.

An essential element of the leather product of this invention and the properties attributed thereto are in large part due to the use of the novel fibrillated leather fiber composition used to produce the leather product.  The fibrillated leather fiber may have other uses, for example, in gasket materials, filter media, insulation, as a composite with other materials, pre or post formed shapes, etc.

Various changes and modifications can be made in the process and products of this invention without departing from the spirit and scope thereof.  The various embodiments which are disclosed herein are for the purpose of illustrating the invention and are not intended to be limiting.

23

## EXAMPLES

A reconstituted leather sheet was prepared by chopping blue chrome leather shavings in a hammer mill and dispersing the chopped product at 6% dispersion solids in water. The slurry was then refined by wet fibrillating until the fibrillated leather fibers had a Canadian Standard Freeness of -170 ml. The slurry was then diluted to less than 2% solids. A 53% aqueous emulsion of an ethylene-vinyl acetate resin was added in an amount sufficient to realize a slurry containing 80 grams of solids of which 80% were fiber and 20% were binder. The slurry at this point contained 1.3% solids. The slurry was vacuum felted on a 144 square inch screen at 20 inches of mercury. The resulting sheet contained about 30% solids. The sheet was then cold pressed at 10.8 tons (ca. 150 psi) for 120 seconds. The pressed sheet was then allowed to dry at room temperature (72°F, 60% RH) for 16 hours and then hot pressed at 176°F for 180 seconds and 14.4 tons (ca 200 psi) pressure.

The foregoing procedure was repeated numerous times with variations in process conditions and components in order to determine the change in the physical properties of the sheet. In the tables which follow, the changes in the procedure are noted together with the physical properties realized thereby. The physical parameters were measured by the following standard tests:

| Parameter | Test Designation |
|-----------|------------------|
| | ASTM |
| Thickness | D-1813 |
| Density | D-2346 |
| Tensile | D-412 |
| Elongation | D-412 |
| Mullens Burst | D-2210/D-774 |
| Ball Burst | D-2207 |
| Extension | D-2207 |
| Slit Tear | D-2212 |
| Stitch Tear | E-13 |
| Water absorption | D-1815 |
| Water vapor transmission | E-96-66 |
| Gurley stiffness | D-747-70 |
| Die C Tear | D-624 |

The entire description of all of these ASTM tests are incorporated herein by reference.

25

## EXAMPLE I

## EFFECT OF SLURRY SOLIDS ON SHEET PHYSICAL PROPERTIES

### Composition

Fiber Source
: Refined Chrome Tanned Scrap SW (60 min.)*

Binder
: Airflex 40l (53% Emulsion)

Ratio
: 80% Fiber/20% Binder

### Forming Conditions

Slurry
: Aqueous/1.0-2.0%/80 g Total Solids

Felt
: **144 in.$^2$/20"Hg/3 min. Vac. Dry

Cold Press
: 10.8 tons (about 150 psi)/Between Pulp Laps/120 secs.

Moisture Control
: Equilibrated 16 hrs. @ 72°F & 60% R.H./Unrestrained

Hot Press
: 176°F/180 sec./14.4 tons (about 220 psi)

* SW (60 min. ) means a Sprout-Walden refiner was used for 60 minutes.

** approximate.

26

## TABLE I - Variation of Slurry Solids

| SHEET No. | 1 | 2 | 3 | 4 |
|---|---|---|---|---|
| Slurry Solids (%) | 1.0 | 1.3 | 1.6 | 2.0 |
| Felting Time (min) | 17.9 | 13.6 | 12.3 | 9.9 |
| Thickness (mils) | 45 | 48 | 44 | 44 |
| Density (g/cm3) | 1.15 | 1.10 | 1.13 | 1.11 |
| Tensile strength (psi) | 5665 | 4957 | 5312 | 5517 |
| Elongation (%) | 31 | 32 | 32 | 29 |
| **Stiffness** | | | | |
| Gurley (g) | 36 | 37 | 31 | 33 |
| Tensile Force @ 1% Elongation (psi) | 1425 | 1407 | 1295 | 1406 |

Conclusions: Varying slurry solids within 1 to 2% does not affect physical properties.

## EXAMPLE II

### EFFECT OF COLD PRESS (TIME) ON SHEET PHYSICAL PROPERTIES

#### COMPOSITION

| | |
|---|---|
| Fiber Source | Refined Chrome Tanned Scrap SW(60 min.) |
| Binder | Airflex 401(53% Emulsion) |
| Ratio | 80% Fiber/20% Binder |

#### Forming Conditions

| | |
|---|---|
| Slurry | Aqueous/1.3%/80 g Total Solids |
| Felt | 144 in.$^2$/20"Hg/3 min. Vac. Dry |
| Cold Press | 10.8 tons(*150 psi)/Between Pulp Laps/0-300 sec. |
| Moisture Control | Equilibrated 16 hrs. @ 72°F & 60% R.H./Unrestrained |
| Hot Press | None |

*approximate

TABLE II - Variation in Cold Press Time

| SHEET No. | 5 | 6 | 7 | 8 | 9 | 10 |
|---|---|---|---|---|---|---|
| Cold Press (tons) | 10.8 | 10.8 | 10.8 | 10.8 | 10.8 | 10.8 |
| Time (sec) | 0 | 30 | 60 | 120 | 180 | 300 |
| Thickness (mils) | 70 | 54 | 53 | 53 | 52 | 50 |
| Density (g/cm$^3$) | 0.82 | 0.99 | 0.97 | 1.02 | 0.99 | 1.01 |
| Tensile strength (psi) | 3152 | 4288 | 4638 | 4642 | 4765 | 4635 |
| Elongation (%) | 35 | 32 | 31 | 34 | 31 | 32 |
| Stiffness | | | | | | |
| Gurley (g) | 42 | 39 | 43 | 36 | 41 | 40 |
| Tensile force @ 1% Elongation (psi) | 702 | 1091 | 1221 | 972 | 1132 | 760 |

Conclusions: With a variation of cold press time from 0 to 300 seconds, thickness decreases, density increases and tensile strength increases to a plateau. Elongation is unaffected.

## EXAMPLE III

## EFFECT OF COLD PRESS (PRESSURE) ON SHEET PHYSICAL PROPERTIES

### Composition

| | |
|---|---|
| Fiber Source | Refined Chrome Tanned Scrap SW(60 min.) |
| Binder | Airflex 401(53% Emulsion) |
| Ratio | 80% Fiber/20% Binder |

### Forming Conditions

| | |
|---|---|
| Slurry | Aqueous/1.3%/80 g Total Solids |
| Felt | 144 in.$^2$/20"Hg/3 min. Vac. Dry |
| Cold Press | 0-36.0 tons(~500 psi)/Between Pulp Laps/120 sec. |
| Moisture Control | Equilibrated 16 hrs. @ 72°F & 60% R.H./Unrestrained |
| Hot Press | None |

TABLE III - Variation in Cold Press Pressue - No Hot Pressing

| SHEET NO. | 11 | 12 | 13 | 14 | 15 | 16 |
|---|---|---|---|---|---|---|
| Cold Press (tons) | 0 | 1.8 | 5.4 | 10.8 | 18.0 | 36.0 |
| Time (sec) | 120 | 120 | 120 | 120 | 120 | 120 |
| Thickness (mils) | 70 | 62 | 56 | 53 | 51 | 49 |
| Density (g/cm$^3$) | 0.82 | 0.92 | 0.98 | 1.02 | 1.01 | 1.03 |
| Tensile strength (psi) | 3152 | 3818 | 4351 | 4642 | 4832 | 4711 |
| Elongation (%) | 35 | 33 | 32 | 32 | 27 | 28 |
| **Stiffness** | | | | | | |
| Gurley (g) | 42 | 46 | 39 | 34 | 41 | 34 |
| Tensile force @ 1% Elongation (psi) | 702 | 901 | 872 | 972 | 1077 | 814 |

Conclusions: A variation of 0 to 36 tons in cold press produces decreased thickness, increased density, increased tensile strength and slight depression in elongation.

## EXAMPLE IV

### EFFECT OF HOT PRESS (TIME) ON SHEET PHYSICAL PROPERTIES

#### Composition

| | |
|---|---|
| Fiber Source | Refined Chrome Tanned Scrap SW(60 min.) |
| Binder | Airflex 401(53% Emulsion) |
| Ratio | 80% Fiber/20% Binder |

#### Forming Conditions

| | |
|---|---|
| Slurry | Aqueous/1.3%/80 g Total Solids |
| Felt | 144 in.$^2$/20"Hg/3 min. Vac. Dry |
| Cold Press | None |
| Moisture Control | Equilibrated 16-24 hrs. @ 72°F & 60% R.H./Unrestrained |
| Hot Press | 176°F/0-600 sec./14.4 tons (~200 psi) |

TABLE IV - Variation in Hot Press Time

| SHEET No. | 17 | 18 | 19 | 20 | 21 |
|---|---|---|---|---|---|
| Hot press (tons) | 14.4 | 14.4 | 14.4 | 14.4 | 14.4 |
| Time (sec) | 60 | 120 | 180 | 300 | 600 |
| Temperature (°F) | 176 | 176 | 176 | 176 | 176 |
| Thickness (mils) | 54 | 53 | 55 | 54 | 56 |
| Density (g/cm$^3$) | 1.06 | 1.07 | 1.05 | 1.12 | 1.10 |
| Tensile (psi) | 4237 | 3901 | 4048 | 4220 | 4600 |
| Elongation (%) | 38 | 33 | 35 | 35 | 33 |
| | | | | | |
| Stiffness | | | | | |
| Gurley (g) | 39 | 38 | 37 | 48 | 48 |
| Tensile force @ 1% Elongation (psi) | 859 | 834 | 823 | 897 | 895 |

Conclusions: Variation of hot press time beyond 60 seconds does not appear to significantly affect the above indicated properties.

## EXAMPLE V

### EFFECT OF HOT PRESS (PRESSURE) ON SHEET PHYSICAL PROPERTIES

#### Composition

| | |
|---|---|
| Fiber Source | Refined Chrome Tanned Scrap SW(60 min.) |
| Binder | Airflex 401(53% Emulsion) |
| Ratio | 80% Fiber/20% Binder |

#### Forming Conditions

| | |
|---|---|
| Slurry | Aqueous/1.3%/80 g Total Solids |
| Felt | 144 in.$^2$/20"Hg/3 min. Vac. Dry |
| Cold Press | None |
| Moisture Control | Equilibrated 16-24 hrs. @ 72°F & 60% R.H./Unrestrained |
| Hot Press | 176°F/180 sec./0-36.0 tons (~500 psi) |

33

TABLE V - Variation in Hot Press Pressure - No Cold Pressing

| SHEET No. | 22 | 23 | 24 | 25 | 26 | 27 |
|---|---|---|---|---|---|---|
| Hot Press (tons) | 0 | 3.6 | 7.6 | 14.4 | 21.6 | 36.0 |
| Time (sec) | 180 | 180 | 180 | 180 | 180 | 180 |
| Temperature (°F) | 176 | 176 | 176 | 176 | 176 | 176 |
| Thickness (mils) | 74 | 62 | 58 | 55 | 52 | 50 |
| Density (g/cm$^3$) | 0.79 | 0.97 | 1.02 | 1.05 | 1.14 | 1.15 |
| Tensile strength (psi) | 2999 | 3990 | 4119 | 4048 | 4222 | 4778 |
| Elongation (%) | 33 | 33 | 34 | 35 | 38 | 37 |
| Stiffness | | | | | | |
| Gurley (g) | 44 | 39 | 34 | 37 | 39 | 38 |
| Tensile force @ 1% Elongation (psi) | 576 | 679 | 875 | 823 | 1133 | 1168 |

Conclusions: Variations of hot press pressure from 0 to 36 tons causes decreased thickness, increased density, increased tensile strength, slight increase in elongation and increased stiffness.

<u>EXAMPLE VI</u>

EFFECT OF HOT PRESS (TEMPERATURE) ON SHEET PHYSICAL PROPERTIES

<u>Composition</u>

| | |
|---|---|
| Fiber Source | Refined Chrome Tanned Scrap SW(60 min.) |
| Binder | Airflex 401(53% Emulsion) |
| Ratio | 80% Fiber/20% Binder |

<u>Forming Conditions</u>

| | |
|---|---|
| Slurry | Aqueous/1.3%/80 g Total Solids |
| Felt | 144 in.$^2$/20"Hg/3 min. Vac. Dry |
| Cold Press | None |
| Moisture Control | Equilibrated 16-24 hrs. @ 72°F & 60% R.H./Unrestrained |
| Hot Press | 80-212°F/180 sec./144.4 tons (~200 psi) |

TABLE VI – Variation in Hot Press Temperature – No Cold Pressing

| SHEET No. | 28 | 29 | 30 | 31 | 32 | 33 |
|---|---|---|---|---|---|---|
| Hot Press (tons) | 14.4 | 14.4 | 14.4 | 14.4 | 14.4 | 14.4 |
| Time (sec) | 180 | 180 | 180 | 180 | 180 | 180 |
| Temperature (°F) | 80 | 140 | 158 | 176 | 194 | 212 |
| Thickness (mils) | 60 | 58 | 54 | 55 | 50 | 51 |
| Density (g/cm$^3$) | 1.04 | 0.99 | 1.05 | 1.05 | 1.13 | 1.11 |
| Tensile strength (psi) | 3019 | 3121 | 3898 | 4048 | 4218 | 3539 |
| Elongation (%) | 44 | 38 | 36 | 35 | 34 | 32 |
| **Stiffness** | | | | | | |
| Gurley (g) | 30 | 29 | 28 | 37 | 35 | 48 |
| Tensile force @ 1% Elongation (psi) | 771 | 755 | 699 | 823 | 1036 | 1467 |

Conclusions: Variation of hot press temperature causes a decrease in thickness, increase in density, increase in stiffness and a decrease in elongation. Maximum tensile strength is produced at about 176°F to 194°F.

## EXAMPLE VII

### EFFECT OF COLD AND/OR HOT PRESS ON SHEET PHYSICAL PROPERTIES

#### Composition

| | |
|---|---|
| Fiber Source | Refined Chrome Tanned Scrap SW(60 Min.) |
| Binder | Airflex 401 (53% Emulsion) |
| Ratio | 80% Fiber/20% Binder |

#### Forming Conditions

| | |
|---|---|
| Slurry | Aqueous/1.3%/80 g Total Solids |
| Felt | 144 in.$^2$/20"Hg/3 min. Vac. Dry |
| Cold Press | 0-10.8 tons(*150 psi)/Between Pulp Laps/0-120 sec. |
| Moisture Control | Equilibrated 16 hrs. @ 72°F & 60% R.H./Unrestrained |
| Hot Press | 0-176°F./0-180 sec./0-14.4 tons ($\sim$200 psi) |

*approximate

## TABLE VII - Pressing Variations

| SHEET No. | 34 | 35 | 36 | 37 | 38 | 39 |
|---|---|---|---|---|---|---|
| Cold Press (tons) | 10.8 | 10.8 | 10.8 | 10.8 | 0 | 0 |
| Time (sec) | 120 | 120 | 120 | 120 | 0 | 0 |
| Hot Press (tons) | 0 | 0 | 14.4 | 14.4 | 14.4 | 14.4 |
| Time (sec) | 0 | 0 | 180 | 180 | 180 | 180 |
| Temperature (°F) | 0 | 0 | 176 | 176 | 176 | 176 |
| Thickness (mils) | 54 | 51 | 46 | 46 | 55 | 55 |
| Density (g/cm$^3$) | 0.96 | 1.06 | 1.08 | 1.14 | 1.04 | 1.06 |
| Tensile strength (psi) | 4660 | 4623 | 4966 | 5521 | 3990 | 4105 |
| Elongation (%) | 32 | 32 | 29 | 31 | 36 | 33 |
| **Stiffness** | | | | | | |
| Gurley (g) | 37 | 33 | 35 | 36 | 38 | 37 |
| Tensile force @ 1% Elongation (%) | 994 | 950 | 1257 | 1600 | 853 | 790 |

Conclusions: The combination of cold and hot pressing definitely increases tensile strength and stiffness.

## EXAMPLE VIII

### EFFECT OF FIBER REFINING ON SHEET PHYSICAL PROPERTIES

#### Composition

| | |
|---|---|
| Fiber Source | Refined Chrome Tanned Scrap SW |
| Binder | Airflex 401(53% Emulsion) |
| Ratio | 80% Fiber/20% Binder |

#### Forming Conditions

| | |
|---|---|
| Slurry | Aqueous/1.3%/80 g Total Solids |
| Felt | 144 in.$^2$/20"Hg/3 min. Vac. Dry |
| Cold Press | 10.8 tons(~150 psi)/Between Pulp Laps/120 sec. |
| Moisture Control | Equilibrated 16 hrs. @ 72°F & 60% R.H./Unrestrained |
| Hot Press | 176°F/180 sec./14.4 tons (~200 psi) |

TABLE VIII – Variation In Refining

| SHEET No.                         | 40   | 41   | 42   | 43   |
|-----------------------------------|------|------|------|------|
| Refining Time (sec)               | 70   | 110  | 240  | 260  |
| Canadian Standard Freeness (sec)  | -120 | -150 | -550 | -710 |
| Felting Time (sec)                | 10.7 | 17.8 | 19.3 | 20+  |
| Thickness (mils)                  | 52   | 49   | 47   | 50   |
| Density (g/cm$^3$)                | 1.08 | 1.02 | 1.04 | 1.07 |
| Tensile strength (psi)            | 4211 | 4221 | 4713 | 4892 |
| Elongation (%)                    | 29   | 29   | 33   | 26   |

Stiffness

| | 40 | 41 | 42 | 43 |
|-----------------------------------|------|------|------|------|
| Gurley (g)                        | 31   | 33   | 43   | 44   |
| Tensile force @ 1% Elongation (psi) | 1213 | 1648 | 2120 | 1988 |

TABLE VIII (Cont.)

| SHEET No. | 44 | 45 | 46 | 47 | 48 |
|---|---|---|---|---|---|
| Refining Time (min) | None | 10 | 50 | 40 | 60 |
| Canadian Standard Freeness (sec) | +280 | +110 | -103 | -152 | -170 |
| Felting Time (min) | 0.4 | 1.5 | 8.0 | 12.0 | 16.2 |
| Thickness (mils) | 48 | 45 | 49 | 45 | 43 |
| Density (g/cm$^3$) | 0.89 | 0.93 | 0.96 | 1.12 | 1.12 |
| Tensile strength (psi) | 1218 | 2003 | 3604 | 5609 | 5825 |
| Elongation (%) | 20 | 21 | 31 | 29 | 27 |
| Stiffness | | | | | |
| Gurley (g) | 12 | 12 | 26 | 36 | 32 |
| Tensile force @ 1% Elongation (psi) | 430 | 396 | 977 | 1497 | 1397 |

Conclusions:  The greater the refining, the higher the tensile strength, stiffness and felting times.

## EXAMPLE IX

### EFFECT OF COMBINING FIBERS WITH + AND − FREENESS
### ON SHEET PHYSICAL PROPERTIES

#### Compositions

| | |
|---|---|
| Fiber Source | Refined Chrome Tanned Scrap SW(10 min.) & SW14(60 min.) |
| Binder | Airflex 401 (53% Emulsion) |
| Ratio | 80% Fiber/20% Binder |

#### Forming Conditions

| | |
|---|---|
| Slurry | Aqueous/1.3%/80 g Total Solids |
| Felt | 144 in.$^2$/20"Hg/3 min. Vac. Dry |
| Cold Press | 10.8 tons(~150 psi)/Between Pulp Laps/120 sec. |
| Moisture Control | Equilibrated 16 hrs. @ 72°F & 60% R.H./Unrestrained |
| Hot Press | 176°F/180 sec./14.4 tons (~200 psi) |

TABLE IX - Combination of Fibers

| SHEET No. | 49 | 50 | 51 | 52 |
|---|---|---|---|---|
| Fiber | | | | |
| CSF = -170 (%) | 100 | 75 | 50 | 0 |
| CSF = +110 (%) | 0 | 25 | 50 | 100 |
| Thickness (mils) | 48 | 50 | 51 | 45 |
| Density (g/cm$^3$) | 1.11 | 1.05 | 1.00 | 0.93 |
| Tensile strength (psi) | 4965 | 4069 | 3511 | 2003 |
| Elongation (%) | 27 | 26 | 24 | 21 |
| | | | | |
| Stiffness | | | | |
| Gurley (g) | 49 | 42 | 36 | 12 |
| Tensile force @ 1% Elongation (psi) | 1450 | 1370 | 884 | 396 |

Conclusions: The greater the refining, the higher the tensile strength and stiffness.

<u>EXAMPLE X</u>

EFFECT OF MOISTURE LEVEL AT HOT PRESS ON
SHEET PHYSICAL PROPERTIES

<u>Composition</u>

| | |
|---|---|
| Fiber Source | Refined Chrome Tanned Scrap SW(60 min.) |
| Binder | Airflex 401(53% Emulsion) |
| Ratio | 80% Fiber/20% Binder |

<u>Forming Conditions</u>

| | |
|---|---|
| Slurry | Aqueous/1.3%/80 g Total Solids |
| Felt | 144 in.$^2$/20"Hg/3 min. Vac. Dry |
| Cold Press | 10.8 tons($\sim$150 psi)/Between Pulp Laps/120 sec. |
| Moisture Control | Equilibrated 16 hrs. @ 72°F & 60% R.H./Unrestrained |
| Hot Press | 176°F/180 sec./14.4 tons ($\sim$200 psi) |

44

0089029

TABLE X - Moisture Content At Hot Press

| SHEET No. | 53 | 54 | 55 | 56 | 57 | 58 |
|---|---|---|---|---|---|---|
| Moisture @ Hot Press (%) | 0 | 12 | 19 | 26 | 34 | 49 |
| @ Testing (%) | 12 | 14 | 15 | 15 | 15 | 15 |
| Thickness (mils) | 57 | 47 | 47 | 47 | 48 | 46 |
| Density (g/cm$^3$) | 0.97 | 1.06 | 1.11 | 1.10 | 1.04 | 1.12 |
| Tensile strength (psi) | 4415 | 5075 | 4941 | 4918 | 4373 | 5100 |
| Elongation (%) | 35 | 28 | 33 | 31 | 26 | 31 |
| Stiffness Gurley (g) | 33 | 31 | 34 | 33 | 30 | 54 |
| Tensile force @ 1% Elongation (psi) | 776 | 980 | 1200 | 1317 | 886 | 1092 |

Conclusions: Indefinite

## EXAMPLE XI

### EFFECT OF FAT LIQUORING AGENTS (F.L.A.) ON SHEET PHYSICAL PROPERTIES

**Composition**

| | |
|---|---|
| Fiber Source | Refined Chrome Tanned Scrap SW(60 min.) |
| Binder | Airflex 401(53% Emulsion) |
| Ratio | 80% Fiber/20% Binder |

**Forming Conditions**

| | |
|---|---|
| Slurry | Aqueous/1.3%/80 g Total Solids |
| Felt | 144 in.$^2$/20"Hg/3 min. Vac. Dry |
| Cold Press | 10.8 tons(~150 psi)/Between Pulp Laps/120 sec. |
| Moisture Control | Equilibrated 16 hrs. @ 72°F 60% R.H./Unrestrained |
| Hot Press | 176°F/180 sec./144.4 tons (~200 psi) |

46

TABLE XIA - Fat Liquoring Agent Addition Pre-Binder Addition

| SHEET No. | 59 | 60 | 61 | 62 | 63 | 64 | 65 |
|---|---|---|---|---|---|---|---|
| Fat Liquoring Agent Used | None | Dymsol S | Dymsol S | Dymsol S | Tanoyl MB | Tanoyl MB | Tanoyl MB |
| Level (%)* | 0 | 5 | 10 | 25 | 5 | 10 | 25 |
| Thickness (mils) | 47 | 45 | 46 | 47 | 46 | 47 | 49 |
| Density (g/cm$^3$) | 1.12 | 1.02 | 1.03 | 1.02 | 0.92 | 0.97 | 0.96 |
| Tensile strength (psi) | 4925 | 2284 | 1763 | 1256 | 2276 | 1451 | 1227 |
| Elongation (%) | 32 | 18 | 17 | 19 | 18 | 13 | 18 |
| Stiffness | | | | | | | |
| Gurley (g) | 43 | 25 | 24 | 18 | 27 | 21 | 20 |
| Tensile force @ 1% Elongation (psi) | 1478 | 639 | 558 | 393 | 632 | 497 | 410 |

* calculated on basis of dry leather fiber weight.

## TABLE XIB

### Fat Liquoring Agent Addition: Post-Binder Addition

| SHEET NO. | 66 | 67 | 68 | 69 | 70 | 71 | 72 |
|---|---|---|---|---|---|---|---|
| Fat Liquoring Agent Used | None | Dymsol S | Dymsol S | Dymsol S | Tanoyl MB | Tanoyl MB | Tanoyl MB |
| * Level (%) | 0 | 5 | 10 | 25 | 5 | 10 | 25 |
| Thickness (mils) | 47 | 46 | 49 | 47 | 45 | 48 | 52 |
| Density (g/cm$^3$) | 1.09 | 1.06 | 0.98 | 1.03 | 1.06 | 0.99 | 0.96 |
| Tensile strength (psi) | 4986 | 2371 | 1692 | 1403 | 2804 | 1786 | 1244 |
| Elongation (%) | 30 | 18 | 16 | 20 | 23 | 17 | 17 |
| Stiffness | | | | | | | |
| Gurley (g) | 44 | 26 | 23 | 19 | 27 | 22 | 22 |
| Tensile force @ 1% Elongation (psi) | 1654 | 807 | 653 | 479 | 823 | 531 | 503 |

*calculated on basis of dry leather fiber weight.

## TABLE XIC

### Fat Liquoring Agent Addition: Post-Binder Addition

| SHEET No. | 73 | 74 | 75 | 76 | 77 | 78 | 79 |
|---|---|---|---|---|---|---|---|
| Fat Liquoring Agent Used | None | Atlasol 160-S | Atlasol 160-S | Atlasol 160-S | Eureka 102 | Eureka 102 | Eureka 102 |
| Level (%) * | 0 | 5 | 10 | 25 | 5 | .10 | 25 |
| Thickness (mils) | 45 | 47 | 46 | 48 | 44 | 47 | 48 |
| Density (g/cm$^3$) | 1.11 | 0.95 | 1.01 | 0.96 | 1.08 | 0.98 | 0.97 |
| Tensile strength (psi) | 5314 | 2417 | 2365 | 1713 | 3078 | 2080 | 2012 |
| Elongation (%) | 29 | 17 | 20 | 19 | 20 | 17 | 22 |
| Stiffness | | | | | | | |
| Gurley (g) | 40 | 25 | 22 | 19 | 29 | 26 | 22 |
| Tensile force @ 1% Elongation (psi) | 1523 | 718 | 684 | 399 | 806 | 636 | 591 |

* calculated on basis of dry leather fiber weight.

## TABLE XID

### Fat Liquoring Agent Addition - Post-Binder Addition

| SHEET No. | 80 | 81 | 82 | 83 | 84 | 85 | 86 |
|---|---|---|---|---|---|---|---|
| Fat Liquoring Agent Used | None | Catalix GS | Catalix GS | Catalix GS | Catalix T | Catalix T | Catalix T |
| Level (%) * | 0 | 1 | 3 | 5 | 1 | 3 | 5 |
| Thickness (mils) | 44 | 46 | 44 | 47 | 45 | 44 | 45 |
| Density (g/cm$^3$) | 1.10 | 1.04 | 1.11 | 1.09 | 1.14 | 1.13 | 1.12 |
| Tensile strength (psi) | 5246 | 5166 | 5609 | 4732 | 5614 | 4459 | 4645 |
| Elongation (%) | 26 | 30 | 27 | 29 | 29 | 24 | 29 |
| Stiffness | | | | | | | |
| Gurley (g) | 32 | 37 | 35 | 34 | 38 | 30 | 31 |
| Tensile force @ 1% Elongation (psi) | 1111 | 1264 | 1268 | 1267 | 1446 | 1459 | 1458 |

* calculated on basis of dry leather fiber weight.

## TABLE XI E

### Fat Liquoring Agent Addition –
(Binder + 1/2 Slurry) Combined with (F.L.A. + 1/2 Slurry)
and Mixed Together Prior to Felting

| SHEET No. | 87 | 88 | 89 | 90 | 91 | 92 | 93 |
|---|---|---|---|---|---|---|---|
| Fat Liquoring Agent Used | None | Dymsol S | Dymsol S | Dymsol S | Tanoyl MB | Tanoyl MB | Tanoyl MB |
| Level (%) * | 0 | 5 | 10 | 25 | 5 | 10 | 25 |
| Thickness (mils) | 44 | 45 | 49 | 47 | 45 | 47 | 48 |
| Density (g/cm$^3$) | 1.14 | 1.08 | 1.00 | 1.03 | 1.06 | 1.00 | 1.02 |
| Tensile strength (psi) | 5727 | 2703 | 1782 | 1537 | 2886 | 2067 | 1386 |
| Elongation (%) | 30 | 21 | 20 | 21 | 21 | 21 | 17 |
| **Stiffness** | | | | | | | |
| Gurley (g) | 38 | 27 | 23 | 20 | 27 | 24 | 20 |
| Tensile force @ 1% Elongation (psi) | 1326 | 818 | 624 | 363 | 644 | 550 | 472 |

* calculated on basis of dry leather fiber weight.

. TABLE XIF

### Fat Liquoring Agent Addition – Post-Felt, F.L.S. Dissolved in Water and Drawn Through Formed Sheet with Vacuum

| SHEET No. | 94 | 95 | 96 | 97 | 98 | 99 | 100 |
|---|---|---|---|---|---|---|---|
| Fat Liquoring Agent Used | None | Dymsol S | Dymsol S | Dymsol S | Tanoyl MB | Tanoyl MB | Tanoyl MB |
| Level (%) * | 0 | 5 | 10 | 25 | 5 | 10 | 25 |
| Thickness (mils) | 45 | 46 | 45 | 47 | 46 | 46 | 47 |
| Density ($g/cm^3$) | 1.14 | 1.10 | 1.12 | 1.07 | 1.09 | 1.10 | 1.06 |
| Tensile strength (psi) | 5187 | 4537 | 4880 | 4588 | 4749 | 4524 | 4510 |
| Elongation (%) | 28 | 26 | 26 | 28 | 25 | 26 | 26 |
| **Stiffness** | | | | | | | |
| Gurley (g) | 39 | 30 | 32 | 24 | 31 | 28 | 25 |
| Tensile force @ 1% Elongation (psi) | 1552 | 1350 | 1114 | 986 | 1074 | 1036 | 1188 |

* calculated on basis of dry leather fiber weight

## TABLE XIG

Fat liquoring Agent Addition Post Hot Press, Dissolved
in Hot Water ( 135ºF) and sheets drummed In
Mixture for 30 minutes

| SHEET NO. | 101 | 102 | 103 | 104 | 105 | 106 | 107 |
|---|---|---|---|---|---|---|---|
| Fat Liquoring | | Dmsol | Dmsol | Dmsol | Tanoyl | Tanoyl | Tanoyl |
| Agent Used | None | S | S | S | MB | MB | MB |
| Level (%) * | 0 | 5 | 10 | 25 | 5 | 10 | 25 |
| Thickness (mils) | 47 | 50 | 48 | 49 | 50 | 49 | 49 |
| Density (g/cm$^3$) | 1.09 | 1.06 | 1.11 | 1.05 | 1.03 | 1.08 | 1.04 |
| Tensile strength (psi) | 5120 | 4642 | 4558 | 4558 | 4471 | 4746 | 4300 |
| Elongation (%) | 28 | 30 | 31 | 30 | 30 | 30 | 32 |
| Stiffness Gurley (g) | 35 | 31 | 28 | 29 | 26 | 30 | 28 |
| Tensile force @ 1% Elongation (psi) | 1683 | 926 | 1042 | 884 | 739 | 950 | 947 |

*calculated on basis of dry leather fiber weight

Conclusions: Post-binder addition of Atlasol 160-S provided the greatest
reduction in stiffness with the least sacrifice in tensile strength.

54

## EXAMPLE XII

## EFFECT OF COLD/HOT PRESS CONDITIONS

Preliminary evaluation of the effects of cold/hot press conditions appears to show the anticipated trends, i.e., increasing pressing time, temperature, and pressure generally increases sheet density, stiffness, and strength. The data also indicate that cold pressing to express free water has a significant effect on final sheet properties.

## XII - A

### EFFECT OF HOT PRESS CONDITIONS (PRESSURE) ON SHEET PHYSICAL PROPERTIES

#### Composition

| | |
|---|---|
| Fiber Source | Refined Chrome Tanned Scrap SW(60 min.) |
| Binder | Airflex 401 (53% Emulsion) |
| Ratio | 80% Fiber/20% Binder |

#### Forming Conditions

| | |
|---|---|
| Slurry | Aqueous/1.3%/80 g Total Solids |
| Felt | 144 in.$^2$/25"Hg/5 min. Vac. Dry |
| Cold Press | 4 tons($\sim$50 psi)/Between Pulp Laps/30 sec. |
| Moisture Control | Equilibrated 16 hrs. @ 72°F & 60% R.H./Unrestricted |
| Hot Press | 140°F/180 sec./0-22 tons ($\sim$300 psi) |

## TABLE XIIA

| SHEET No. | 108 | 109 | 110 | 111 | 112 | 113 |
|---|---|---|---|---|---|---|
| Hot Press (Tons) | 0 | 4 | 7 | 11 | 16 | 22 |
| Thickness (mils) | 60 | 58 | 51 | 55 | 57 | 53 |
| Density (g/cm$^3$) | 0.70 | 0.80 | 0.77 | 0.78 | 0.77 | 0.83 |
| Stiffness (g) | 49 | 49 | 47 | 52 | 43 | 46 |
| Tensile strength (psi) | 3983 | 4734 | 4323 | 4456 | 4533 | 4205 |
| Elongation (%) | 30 | 26 | 31 | 31 | 30 | 32 |
| Mullens Burst (lbs) | 732 | 713 | 643 | 820 | 800 | 783 |
| Ball Burst (lbs) | 149 | 151 | 142 | 153 | 150 | 143 |
| Extension (mils) | 23 | 27 | 27 | 26 | 39 | 37 |
| Slit Tear (lbs) | 38 | 48 | 38 | 37 | 39 | 37 |
| Stitch Tear (lbs) | 50 | 56 | 49 | 49 | 48 | 50 |
| Water Absorption (g/cm$^3$) | 0.72 | 0.73 | 0.77 | 0.76 | 0.79 | 0.83 |
| Water Vapor Trans. (g/M$^2$/24 hrs) | 99 | 65 | 61 | 61 | 71 | 67 |

<u>EXAMPLE XII - B</u>

EFFECT OF HOT PRESS CONDITIONS (TEMPERATURE/TIME)
ON SHEET PHYSICAL PROPERTIES

<u>Composition</u>

| | |
|---|---|
| Fiber Source | Refined Chrome Tanned Scrap SW(60 min.) |
| Binder | Airflex 401 (53% Emulsion) |
| Ratio | 80% Fiber/20% Binder |

<u>Forming Conditions</u>

| | |
|---|---|
| Slurry | Aqueous/1.3%/80 g Total Solids |
| Felt | 144 in.$^2$/25"Hg/5 min. Vac. Dry |
| Cold Press | 6 tons($\sim$80 psi)/Between Pulp Laps/30 sec. |
| Moisture Control | Equilibrated 16 hrs. @ 72°F & 60% R.H./Unrestrained |
| Hot Press | 140-180°F/60-300 sec./16 tons ($\sim$225 psi) |

57

TABLE XIIB

|  | Temperature | | | Time | | |
|---|---|---|---|---|---|---|
| SHEET No. | 114 | 115 | 116 | 117 | 118 | 119 |
| Hot Press (tons) | 16 | 16 | 16 | 16 | 16 | 16 |
| Temperature (°F) | 140 | 160 | 180 | 140 | 140 | 140 |
| Time (sec.) | 180 | 180 | 180 | 60 | 180 | 300 |
| Thickness (mils) | 58 | 54 | 51 | 57 | 55 | 55 |
| Density (g/cm$^3$) | 0.78 | 0.80 | 0.83 | 0.75 | 0.81 | 0.78 |
| Stiffness (g) | | | | | | |
| Tensile strength (psi) | 3791 | 4645 | 4780 | 4493 | 4085 | 4353 |
| Elongation (%) | 34 | 27 | 25 | 28 | 28 | 31 |
| Mullens Burst (lbs) | 757 | 682 | 753 | 700 | 685 | 728 |
| Ball Burst (lbs) | 147 | 118 | 128 | 137 | 126 | 136 |
| Extension (mils) | 23 | 23 | 23 | 26 | 26 | 26 |
| Slit Tear (lbs) | 40 | 36 | 40 | 34 | 35 | 36 |
| Stitch Tear (lbs) | 55 | 46 | 51 | 53 | 47 | 51 |
| Water Absorption (g/cm$^3$) | 0.64 | 0.70 | 0.69 | 0.80 | 0.81 | 0.69 |
| Water Vapor Transmission (g/M$^2$/24 hrs) | 61 | 49 | 50 | 76 | 76 | 67 |

55

<u>EXAMPLE XII - C</u>

EFFECT OF COLD/HOT PRESS CONDITIONS ON
SHEET PHYSICAL PROPERTIES

<u>Composition</u>

| | |
|---|---|
| Fiber Source | Refined Chrome Tanned Scrap SW(60 min.) |
| Binder | Airflex 401 (53% Emulsion) |
| Ratio | 80% Fiber/20% Binder* |

<u>Forming Conditions</u>

| | |
|---|---|
| Slurry | Aqueous/1.3%/80 Total Solids |
| Felt | 144 in.$^2$/25"Hg/5 min. Vac. Dry |
| Cold Press | 0-16 tons (~225 psi)/Between Pulp Laps/0-30 sec. |
| Moisture Control | Equilibrated 16 hrs. @ 72°F & 60% R.H./Unrestrained |
| Hot Press | 70 & 140°F & 180 sec./0 & 16 tons (~225 psi) |

59

0089029

## TABLE XIIC

| SHEET No. | 120 | 121 | 122 | 123 | 124 | 125 | 126 |
|---|---|---|---|---|---|---|---|
| Cold Press (tons) | 0 | 4 | 0 | 4 | 7 | 11 | 16 |
| Time (sec.) | 0 | 30 | 0 | 30 | 30 | 30 | 30 |
| Hot Press (tons) | 0 | 0 | 16 | 16 | 16 | 16 | 16 |
| Time (sec.) | 0 | 0 | 180 | 180 | 180 | 180 | 180 |
| Temperature (°F) | 70 | 70 | 140 | 140 | 140 | 140 | 140 |
| Thickness (mils) | 81 | 60 | 61 | 50 | 55 | 49 | 47 |
| Density (g/cm$^3$) | 0.53 | 0.70 | 0.70 | 0.87 | 0.79 | 0.87 | 0.89 |
| Stiffness (g) | 45 | 49 | 32 | 39 | 39 | 41 | 47 |
| Tensile strength (psi) | 2745 | 3983 | 3741 | 4960 | 3744 | 6394 | 5100 |
| Elongation (%) | 35 | 30 | 26 | 29 | 26 | 30 | 30 |
| Mullens Burst(lbs) | 657 | 723 | 582 | 713 | 700 | 798 | 798 |
| Ball Burst (lbs) | 164 | 149 | 126 | 136 | 131 | 152 | 152 |
| Extension (mils) | 28 | 23 | 23 | 23 | 23 | 23 | 23 |
| Slit Tear (lbs) | 32 | 38 | 35 | 37 | 45 | 44 | 43 |
| Stitch Tear (lbs) | 46 | 50 | 45 | 48 | 47 | 47 | 46 |
| Water Absorption (g/cm$^3$) | 0.70 | 0.72 | 0.93 | 0.85 | 0.78 | 0.82 | 0.87 |
| Water Vapor Transmission (g/M$^2$/24 hrs) | 125 | 99 | 84 | 55 | 56 | 45 | 47 |

61

## EXAMPLE XIII

## EFFECT OF STAKING

Mechanical working or "staking" of reconstituted leather sheet with a Molissa machine converts the stiff "boardy" material into a softer, better feeling sheet without serious degradation of other important physical properties.

The fact that this material can survive this type of mechanical treatment and develop a better hand similar to real leather is unexpected.

## EFFECT OF STAKING ON SHEET PHYSICAL PROPERTIES

### Composition

| | |
|---|---|
| Fiber Source | Refined Chrome Tanned Scrap SW(60 min.) |
| Binder | Airflex 401 (53% Emulsion) |
| Ratio | 80% Fiber/20% Binder |

### Forming Conditions

| | |
|---|---|
| Slurry | Aqueous/1.3%/80 g Total Solids |
| Felt | 144 in.$^2$/25"Hg/5 min. Vac. Dry |
| Cold Press | 6 tons ($\sim$80 psi)/Between Pulp Laps/30 sec. |
| Moisture Control | Equilibrated 16 hrs. @ 72°F & 60% R.H./Unrestrained |
| Hot Press | 140°F/180 sec./16 tons ($\sim$225 psi) |

62

TABLE XIII

| SHEET No. | 127 | 128 | 129 | 130 |
|---|---|---|---|---|
| Molissa Settings | | | | |
| Belt Speed (ft/min) | 0 | 31 | 31 | 31 |
| Penetration (mm) | 0 | 10 | 10 | 10 |
| Number of Cycles | 0 | 2 | 5 | 25 |
| Thickness (mils) | 50 | 48 | 49 | 47 |
| Density (g/cm$^3$) | 0.86 | 0.79 | 0.74 | 0.79 |
| Stiffness (g) | 43 | 20 | 14 | 16 |
| Tensile strength (psi) | 4392 | 4552 | 4113 | 3814 |
| Elongation (%) | 27 | 19 | 18 | 17 |
| Mullens Burst (lbs) | 652 | 625 | 597 | 570 |
| Ball Burst (lbs) | 134 | 107 | 98 | 98 |
| Extension (mils) | 23 | 24 | 22 | 25 |
| Slit Tear (lbs) | 39 | 27 | 18 | 18 |
| Water Absorption (g/cm$^3$) | 0.92 | 0.82 | 0.82 | 0.88 |
| Water Vapor Transmission (g/M$^2$/24 hrs) | 110 | 115 | 169 | 192 |

63

64

## EXAMPLE XIV

## EFFECT OF FIBER/BINDER RATIO

A study of sheet physical properties as a function of fiber/binder ratio indicates that an 80/20 to 70/30 ratio is in a region which takes advantage of the properties of each component in the reconstituted composite. The obvious exception is stiffness which decreases continuously as the binder ratio is increased.

65

## EFFECT OF THICKNESS ON SHEET PHYSICAL PROPERTIES

### Composition

| | |
|---|---|
| Fiber Source | Refined Chrome Tanned Scrap SW (60 min.) |
| Binder | Airflex 401 |
| Ratio | 80% Fiber/20% Binder |

### Forming Conditions

| | |
|---|---|
| Slurry | Aqueous/1.3%/32-96 g Total Solids |
| Felt | 144 in.$^2$/25"Hg/5 min. Vac. Dry |
| Cold Press | 6 tons (about 80 psi)/ Between Pulp Laps/30 secs. |
| Moisture Control | Equilibrated 16 hrs. @ 72ºF & 60% R.H./Unrestrained |
| Hot Press | 140ºF/180 sec./16 tons (about 225 psi) |

## TABLE XIV

| SHEET NO. | 131 | 132 | 133 | 134 | 135 | 136 | 137 |
|---|---|---|---|---|---|---|---|
| Fiber (%) | 100 | 90 | 80 | 70 | 60 | 50 | 40 |
| Binder (%) | 0 | 10 | 20 | 30 | 40 | 50 | 60 |
| Thickness (mils) | 68 | 54 | 53 | 49 | 47 | 48 | 44 |
| Density (g/cm$^3$) | 0.67 | 0.81 | 0.83 | 0.86 | 0.86 | 0.87 | 0.93 |
| Stiffness (g) | 75 | 60 | 43 | 37 | 27 | 18 | 11 |
| Tensile strength (psi) | 1834 | 3837 | 4669 | 4270 | 4842 | 4744 | 3814 |
| Elongation (%) | 10 | 24 | 26 | 28 | 31 | 30 | 27 |
| Mullens Burst (lbs) | 386 | 688 | 745 | 760 | 686 | 591 | 513 |
| Ball Burst (lbs) | 90 | 130 | 139 | 132 | 112 | 91 | 62 |
| Extension (mils) | 18 | 22 | 23 | 23 | 25 | 23 | 23 |
| Slit Tear (lbs) | 35 | 45 | 35 | 30 | 23 | 31 | 23 |
| Stitch Tear (lbs) | 44 | 50 | 48 | 47 | 35 | 16 | 13 |
| Water Absorption (g/cm) | 0.93 | 0.97 | 0.83 | 0.80 | 0.66 | 0.48 | 0.38 |
| Water Vapor Transmission (g/M$^2$/24 hrs) | | 164 | 79 | 49 | 32 | 21 | 16 |

## EXAMPLE XV

## EFFECT OF THICKNESS

A number of dimensional properties (such as thickness) play an extremely important role in how a material feels, especially if the material in question is being evaluated subjectively or if the test being used does not include a correction for its effect.

Several of the standard leather tests, e.g., Gurley stiffness, Mullens burst, ball burst, slit tear, stitch tear, and water vapor transmission do not correct for sample thickness. This does not cause a problem if materials of equal thickness are used to evaluate compositional changes or if the test needs to mimic a subjective evaluation.

The data confirm that the stiffness, burst, tear, and vapor transmission tests are highly dependent on test sample thickness, while the tensile, density, elongation, extension, and water absorption tests are not. The use of tensile force (psi) to bring about 1% elongation is a more sensitive and reproducible measurement of stiffness. This test contains a valid correction for thickness.

68

## EFFECT OF THICKNESS ON SHEET PHYSICAL PROPERTIES

### Composition

| | |
|---|---|
| Fiber Source | Refined Chrome Tanned Scrap SW (60 min.) |
| Binder | Airflex 401 |
| Ratio | 80% Fiber/20% Binder |

### Forming Conditions

| | |
|---|---|
| Slurry | Aqueous/1.3%/32-96 g Total Solids |
| Felt | 144 in.$^2$/25"Hg/5 min. Vac. Dry |
| Cold Press | 6 tons (about 80 psi)/ Between Pulp Laps/30 secs. |
| Moisture Control | Equilibrated 16 hrs. @ 72ºF & 60% R.H./Unrestrained |
| Hot Press | 140ºF/180 sec./16 tons (about 225 psi) |

## TABLE XV

| SHEET NO. | 138 | 139 | 140 | 141 | 142 |
|---|---|---|---|---|---|
| Thickness (mils) | 26 | 32 | 39 | 50 | 60 |
| Density (g/cm$^3$) | 0.67 | 0.82 | 0.85 | 0.89 | 0.85 |
| Stiffness (g) | 5 | 11 | 10 | 42 | 61 |
| Tensile strength (psi) | 3736 | 4651 | 4995 | 4527 | 4146 |
| Elongation (%) | 28 | 30 | 32 | 32 | 33 |
| Mullens Burst (lbs) | 288 | 472 | 609 | 802 | 897 |
| Ball Burst (lbs) | 56 | 94 | 110 | 145 | 158 |
| Extension (mils) | 25 | 23 | 24 | 24 | 23 |
| Slit Tear (lbs) | 6 | 17 | 21 | 35 | 40 |
| Stitch Tear (lbs) | 16 | 26 | 36 | 42 | 55 |
| Water Absorption (g/cm$^3$) | 0.58 | 0.61 | 0.70 | 0.75 | 0.73 |
| Water Vapor Transmission (g/M$^2$/24 hrs.) | 165 | 129 | 81 | 54 | 27 |
| Tensile force @ 1% Elongation (psi) | 1167 | 1174 | 1135 | 1159 | 1191 |

7C

## EXAMPLE XVI

### EFFECT OF TYPE BINDER AND REFINING ON SHEET PHYSICAL PROPERTIES

#### Composition

| | |
|---|---|
| Fiber Source | Refined Chrome Tanned Scrap SW (60 min.) and Bauer |
| Binder | Airflex 401 (53% Emulsion) and Plasticized PVA |
| Ratio | 80% Fiber/20% Binder |

#### Forming Conditions

| | |
|---|---|
| Slurry | Aqueous/1.3%/80 g Total Solids |
| Felt | 144 in.$^2$/25"Hg/5 min. Vac. Dry |
| Cold Press | 108 tons (about 150 psi)/Between Pulp Laps/120 secs. |
| Moisture Control | Equilibrated 16 hrs. @ 72°F & 60% R.H./Unrestrained |
| Hot Press | 140°F/180 sec./14.4 tons (about 200 psi) |

## TABLE XVI

| SHEET NO. | 143 | 144 | 145 |
|---|---|---|---|
| Fiber Source | Bauer | Bauer | SW (60 min.) |
| Binder | PVA | Airflex 401 (EVA) | Airflex 401 (EVA) |
| Thickness (mils) | 49 | 48 | 54 |
| Density (g/cc) | 0.80 | 0.79 | 1.06 |
| Tensile Strength (psi) | 3880 | 4552 | 4237 |
| Elongation (%) | 18 | 29 | 38 |
| Mullens Burst (lbs) | 497 | 625 | 657 |
| Ball Burst (lbs) | 82 | 107 | 164 |
| Extension (mils) | 20 | 24 | 28 |
| Slit Tear (lbs) | 23 | 27 | 32 |
| Stitch Tear (lbs) | 37 | 42 | 46 |

Conclusions: EVA improves elongation and provides highest value refining pursuant to this invention (SW-60 min.). EVA also improves strength while still maintaining high tensile strength.

72

## EXAMPLE XVII

### EFFECT OF STAKING AND BINDER
### ON SHEET PHYSICAL PROPERTIES

### Composition

| | |
|---|---|
| Fiber Source | Refined Chrome Tanned Scrap SW (60 min.) and Bauer |
| Binder | Airflex 401 (53% Emulsion) and Plasticized PVA |
| Ratio | 70% Fiber/30% Binder |

### Forming Conditions

| | |
|---|---|
| Slurry | Aqueous/1.3%/50 g Total Solids |
| Felt | 144 in.$^2$/25"Hg/5 min. Vac. Dry |
| Cold Press | 108 tons ( 150 psi)/Between Pulp Laps/120 secs. |
| Moisture Control | Equilibrated 16 hrs. @ 72ºF & 60% R.H./Unrestrained |
| Hot Press | 140ºF/180 sec./14.4 tons (about 200 psi) |

## TABLE XVII

| SHEET NO. | 146* | 147 | 148 |
|---|---|---|---|
| Fiber Source | Bauer | SW (60 min.) | SW (60 min.) |
| Binder | PVA | Airflex 401 (EVA) | Airflex 401 (EVA) |
| Staking | Yes | Yes | No |
| Fat Liquoring Agent (%) | No | 10% Atlasol 160-S and 10% Catalix | 10% Atlasol 160-S and 10 Catalix |
| Thickness (mils) | Destroyed | 26 | 24 |
| Density (g/cc) | | 0.90 | 0.94 |
| Tensile Strength (psi) | | 2865 | 2625 |
| Elongation (%) | | 33 | 26 |
| Mullens Burst (lbs) | | 268 | 260 |
| Ball Burst (lbs) | | 50 | 40 |
| Extension (mils) | | 38 | 28 |
| Slit Tear (lbs) | | 4 | 4 |
| Stitch Tear (lbs) | | 13 | 13 |

73

## TABLE XVII (Cont.)

**Stiffness**

| | | |
|---|---|---|
| Gurley (g) | 1.7 | 2.4 |
| Tensile force at 1% elongation (psi) | 160 | 442 |

\*less than 10 secs.

**Conclusions:** EVA binder sheets can be staked; PVA binder sheets are destroyed when staked. The physical properties, after staking, are not degraded. The stiffness of sheet is decreased significantly after staking.

74

75

## EXAMPLE XVIII

## OTHER BINDERS

The following latex binders were used in producing the leather product of this invention.

| Trade Name | Manufacture | Polymer |
|---|---|---|
| Hycar 1562 | B.F. Goodrich | Butadiene-acrylonitrile |
| Hycar 1571 | B.F. Goodrich | Butadiene-acrylonitrile |
| Hycar 1572 | B.F. Goodrich | Butadiene-acrylonitrile |
| Witcobond 290H | Witco Chemical | Urethane |
| Witcobond 234 | Witco Chemical | Urethane |
| Isis 300 | Isis Chemical | Urethane |
| Neorez R-940 | Polyvinyl Chemical | Urethane |
| Neorez R-960 | Polyvinyl Chemical | Urethane |
| Neorez R-967 | Polyvinyl Chemical | Urethane |
| Neoprene 101 | Dupont | Chloroprene |
| Neoprene 571 | Dupont | Chloroprene |
| Stanchem 6152 | Stan Chem Inc. | Acrylic |
| Bostik S-396 | Bostik | Acrylic |
| Neorez EX 771 | Polyvinyl Chemical | Acrylic |
| Elvanol HV | Dupont | Vinyl Alcohol |
| Elvanol 85-82 | Dupont | Vinyl Acetate-Acrylic |
| Stanchem 5011 | Stan Chem Inc. | Vinyl Acetate-Acrylic |
| Airflex 400 | Air Products | Vinyl Acetate-Ethylene |

Binder formulations, leather product formulations and properties are given in Table XVIII. Component concentrations are given as percent dry weight in the finished leather product. The plasticizers used for the binder were:

| | | |
|---|---|---|
| Kenplast ES-2 | – | Kenrich Petrochemicals |
| Glycerine | – | Fisher Chemical |
| Stanicizer 8 | – | Monsanto |
| Stanicizer S-160 | – | Monsanto |
| 2-Nitro-Biphenyl | – | Pfaltz + Bauer |

## EXAMPLE XVIII (Cont.)

### OTHER BINDERS

Sample Preparation Method

The following procedure was followed for producing the leather product:

1)    A slurry of fibrillated leather, water and binder (including plasticizer) were felted.

2)    The felted sheet was cold pressed for 30 sec. at 120 psi.

3)    The cold pressed sheet was dried overnight at 50% relative humidity to 10% to 30% moisture in the product.

4)    The sheet was hot pressed at 176°F., 120 psi for 3 min.

5)    Physical tests were performed.

## TABLE XVIII

| Binder | Polymer Type | Binder Plasticizer(s) | Binder to Plasticizer Ratio | Fibrillated Leather Fiber % | Tensile (PSI) | Elong., (%) | Tear, Die C,(lbs/inch) | Comments |
|---|---|---|---|---|---|---|---|---|
| Hycar 1562 | Nitrile | S-160 | 3 to 1 | 80 | 864 | 9.0 | --- | Stiff |
| Hycar 1571 | Nitrile | S-160 | 3 to 1 | 80 | 928 | 8.4 | --- | Stiff |
| Hycar 1572 | Nitrile | S-160 | 3 to 1 | 80 | 1181 | 9.1 | --- | Stiff |
| Witcobond 290H | Urethane | None | --- | 80 | 1500 | 14.0 | --- | Stiff |
| Witcobond 234 | Urethane | None | --- | 80 | 1388 | 14.5 | --- | Stiff |
| Isis 300 | Urethane | None | --- | 80 | 1965 | 14.5 | --- | Stiff |
| Neorez R-940 | Urethane | None | --- | 80 | 1160 | 16.0 | --- | Stiff |
| Neorez R-960 | Urethane | None | --- | 80 | 1220 | 22.0 | --- | Stiff |
| Neorez R-967 | Urethane | Glycerine | 1 to 1 | 80 | 2112 | 15.2 | 459 | Stiff |
| Neorez R-967 | Urethane | Kenplast ES-2 | 3 to 2 | 80 | 2383 | 11.1 | 458 | Stiff |
| Neoprene 101 | Chlorprene | S-160, S-8 @ 1:1 | 1 to 1 | 80 | 3626 | 5.6 | 603 | Stiff |

TABLE XVIII (Cont.)

| Binder | Polymer Type | Binder Plasticizer(s) | Binder to Plasticizer Ratio | Fibrillated Leather Fiber % | Tensile (PSI) | Elong., (%) | Tear, Die C,(lbs/inch) | Comments |
|---|---|---|---|---|---|---|---|---|
| Neoprene 571 | Chlorprene | S-160, S-8 @ 1:1 | 2 to 1 | 80 | 2319 | 9.5 | 488 | Stiff |
| Stanchem 6152 | Acrylic | S-160, S-8 2-Nitro @ 1:3:3 | 9 to 7 | 80 | 1739 | 10.9 | 309 | Moderate |
| Stanchem 6152 | Acrylic | Kenplast ES-2 | 3 to 1 | 80 | 2060 | 17.7 | 377 | Moderate |
| Stanchem 6152 | Acrylic | Glycerine | 1 to 1 | 80 | 2789 | 19.2 | 550 | Moderate |
| Stanchem 6152 | Acrylic | Glycerine | 1 to 2 | 80 | 2224 | 13.6 | 377 | Moderate |
| Stanchem 6152 | Acrylic | Kenplast ES-2 | 3 to 1 | 70 | 2034 | 18.7 | 325 | Moderate |
| Bostik S-396 | Acrylic | Kenplast ES-2 | --- | 80 | 2706 | 16.1 | 454 | Moderate |
| Norez EX-771 | Acrylic | None | --- | 80 | 1466 | 5.0 | --- | Stiff |
| Elvanol HV | Vinyl Alcohol | S-160, S-8 @ 1:3 | 2 to 1 | 80 | 1430 | 2.0 | 270 | Stiff |

# TABLE XVIII   (Cont.)

| Binder | Polymer Type | Binder Plasticizer(s) | Binder to Plasticizer Ratio | Fibrillated Leather Fiber % | Tensile (PSI) | Elong., (%) | Tear, Die C,(lbs/inch) | Comments |
|---|---|---|---|---|---|---|---|---|
| Elvanol 85-82 | Vinyl Alcohol | S-160,S-8 @ 1:3 | 2 to 1 | 80 | 2093 | 2.8 | 277 | Stiff |
| Stanchem 5011 | Vinyl Acetate Acrylic | S-160, S-8 2-Nitro @ 1:3:3 | 9 to 7 | 80 | 5324 | 22.1 | 618 | Moderate |
| Stanchem 5011 | Vinyl Acetate Acrylic | Kenplast ES-2 | 2 to 1 | 80 | 2969 | 20.2 | 486 | Moderate |
| Stanchem 5011 | Vinyl Acetate Acrylic | Glycerine | 1 to 1 | 80 | 2963 | 16.5 | 638 | Moderate |
| Stanchem 5011 | Vinyl Acetate Acrylic | Kenplast ES-2 | 1 to 1 | 80 | 1908 | 19.2 | 276 | Moderate |
| Stachem 5011 | Vinyl Acetate Acrylic | Kenplast ES-2 | 2 to 1 | 70 | 3532 | 32.2 | 477 | Moderate |

TABLE XVIII (Cont.)

| Binder | Polymer Type | Binder Plasticizer(s) | Binder to Plas- ticizer Ratio | Fibrillated Leather Fiber % | Tensile (PSI) | Elong., (%) | Tear, Die C,(lbs/inch) | Comments |
|---|---|---|---|---|---|---|---|---|
| Stanchem 5011 | Vinyl Acetate Acrylic | Kenplast ES-2 | 2 to 1 | 70 | 3993 | 30.6 | 522 | Moderate |
| Airflex 400 | Vinyl Acetate Ethylene | None | --- | 80 | 5805 | 26.4 | 706 | Flexible |
| Airflex 401 | Vinyl Acetate Ethylene | None | --- | 80 | 5494 | 32.5 | 697 | Flexible |
| Dow Corning DC-1111 | Methylpoly Siloxane | None | --- | 70 | 500 | 3.6 | 80 | Flexible |

82

0089029

81

## EXAMPLE XIX

### Leather Forming Studies

The leather product of this invention was formed at various stages.

In the three following examples, the following formulation and conditions were used.

| | |
|---|---|
| LEATHER @6.82% wt% aqueous composition (CSF = -200 ml) | 513.2 g. |
| AIRFLEX 401 @ 53% | 28.3 g. |
| ATLASOL 160 S | 1.75 g. |
| CATALIX GS | 3.50 g. |

Cold press = 7 tons (100 psi), 1½ min.

Hot press = 7 tons (100 psi), 3 min. 176ºF

1)   A 3-dimensional cylinder was formed in the slurry state, prefelting stage. A tapered filter cylinder wrapped with scrim was immersed in a slurry of fibrillated leather fiber binder (EVA) and fat liquoring agents. Suction was applied whereby the leather was deposited on the scrim. The cylinder was removed and dried in an oven.

2)   The leather product was formed after cold pressing and prior to hot pressing. Two 2½" circles of 0.075" thickness were cut and placed in golf ball mold halves. A golf ball core was inserted and mold pressed 5 minutes, 176ºF at 7 tons. A leather covered golf ball complete with dimples resulted.

3)   The leather product was formed after cold and hot pressing sheets at a thickness of 0.050" were placed over a bowling pin core, placed in a mold and pressed 10 min., 160ºF at 5 tons. The sheet conformed to the pin contour without splitting.

82

## EXAMPLE XX

### Fat Liquoring Studies

A study was made regarding the solvent fat liquoring of the leather product of this invention at various stages in its process.

1) Slurry solvent fat liquoring - a solvent type fat liquoring agent, Eastol 930, at 23% was added to the fibrillated leather slurry and binder prior to felting. This resulted in a significantly softer, lower 1% modulus, sheet at the expense of tensile and tear strength.

|                  | Control | Test |
|------------------|---------|------|
| TENSILE (psi)    | 2564    | 1188 |
| ELONGATION (%)   | 27.0    | 32.8 |
| 1% MODULUS (psi) | 326     | 105  |
| TEAR (psi)       | 260     | 161  |

2) An attempt was made to chrome re-tan and fat liquor simultaneously. The purpose was to achieve a more uniform sheet by evenly distributing the chrome to which the anionic solvent fat liquor attaches. The sheets used had been cold pressed but not hot pressed. They were run for two hours at 120°F in a 4.5% chrome sulfate and 5% Eastol 930 solution. The result was a decrease in softness again at the expense of other properties.

|                  | Control | Test |
|------------------|---------|------|
| TENSILE (psi)    | 2564    | 1644 |
| ELONGATION (%)   | 27.0    | 22.8 |
| 1% MODULUS (psi) | 326     | 243  |
| TEAR (psi)       | 260     | 203  |

3) The final study involved solvent fat liquoring of hot and cold pressed sheets. This was accomplished in two ways:

A)   12 hours at 120°F in an emulsion of 20% Eastol 930

B)   12 hours at 120°F in 100% Eastol 930

83

## EXAMPLE XX (Cont.)

|                | Control | A    | B    |
|----------------|---------|------|------|
| TENSILE (psi)  | 2564    | 1706 | 1458 |
| ELONGATION (%) | 27.0    | 27.7 | 22.6 |
| 1% MODULUS (psi) | 326   | 250  | 73   |
| TEAR (psi)     | 260     | 204  | 157  |

In 2 and 3 above, as well as the control, the following formulation was used:

| | |
|---|---|
| LEATHER @ 6.82% fibrillated fiber aqueous composition (CSF -200ml) | 513.2 g. |
| AIRFLEX 401 @ 53% | 28.3 g. |
| ATLASOL 160S | 1.75 g. |
| CATALIX GS | 3.50 g. |

Cold press = 7 tons (100 psi) for 1½ minutes.

Hot press = 7 tons (100 psi), 3 minutes, 176ºF.

Sheet thickness was     0.050".

Eastol 930 is a product of Henkel Corporation, Leather Chemicals Div., Saugus, Mass. It is a medium sulfated oil, 2.3% $SO_3$, based on a combination of natural and synthetic oils. In addition it contains approximately 25% of a high boiling solvent to separate the fibers thus increasing softness.

84

## EXAMPLE XXI

### USE OF CHROME TANNED LEATHER SCRAP

A controlled detailed, refining test was performed on fibrillating leather fiber.

The objective of the test was to obtain a reproducible well defined refining curve that would relate "degree of fiber refining" to leather product physical properties.

It was discovered that batch refining (vis-a-vis continuous) can produce a more homogeneous fiber stock which has few if any large nibs.

### Chrome Tanned Leather Scrap

Short fiber grain split shavings sifted with an average moisture content of 18% was used. Initial charge: 18 lbs leather scrap (11.8 lbs dry solids plus 182 lbs water). Calculated slurry solids = 5.9%.

### Refiner

Sprout-Waldron (12" single disk) Laboratory Refiner operated at a fixed speed of about 2600 rpm. Plate pattern: #12716 -A/AA, Ni-hard, closed periphery with sub-surface dams. Feed system: batch-two tank. Average slurry feed rate 12 ± 3 lbs/minute.

### SHEET PREPARATION

#### Composition

| | |
|---|---|
| Fiber | Refined Chrome Tanned Scrap |
| Binder | Airflex 401 (53% Emulsion) |
| Ratio | 70% Fiber/30% Binder |
| Fat Liquoring Agents | 5% Atlasol 160S & 10% Catalux GS (amount added based on dry leather solids). |

85

## EXAMPLE XXI (Cont.)

### Forming Conditions

| | |
|---|---|
| Slurry | Aqueous/1.3%/50 g total solids |
| Felt | 144 in$^2$/25" Hg/3 min Vac. Dry |
| Cold Press | about 100 psi/Between Test Blotting Paper/90 sec. |
| Moisture Control | Equilibrated 16 hrs @ Room Temperature/Unrestrained |
| Hot Press | 176$^o$F. 180 sec./ about 100 psi. |

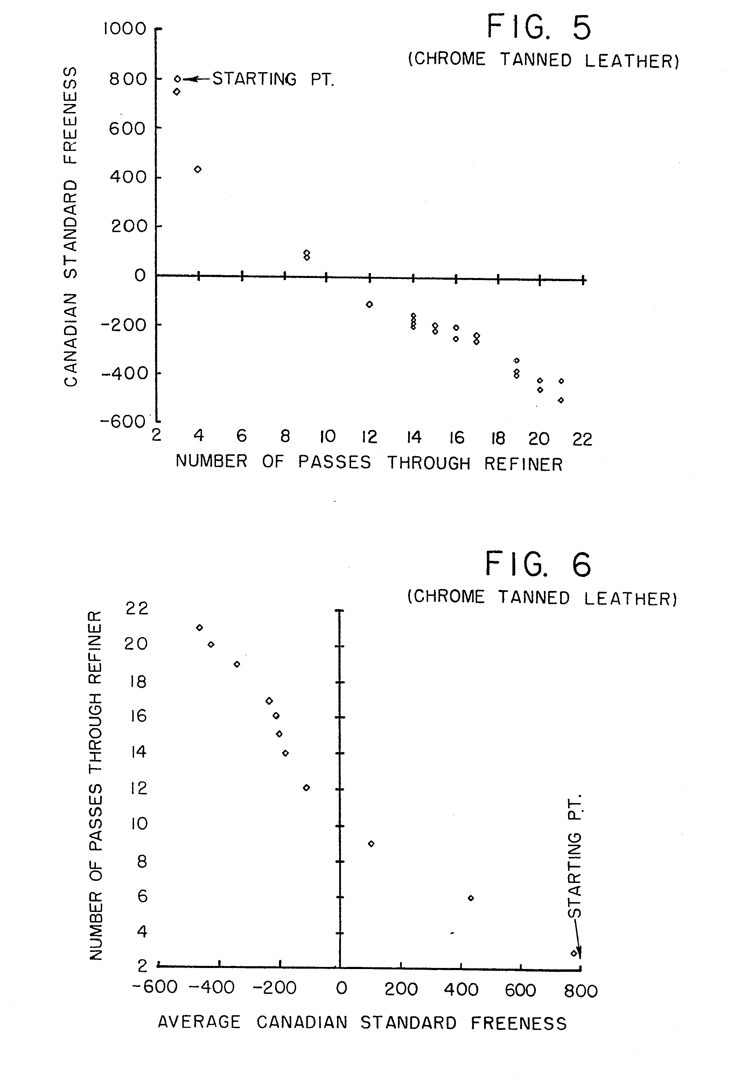

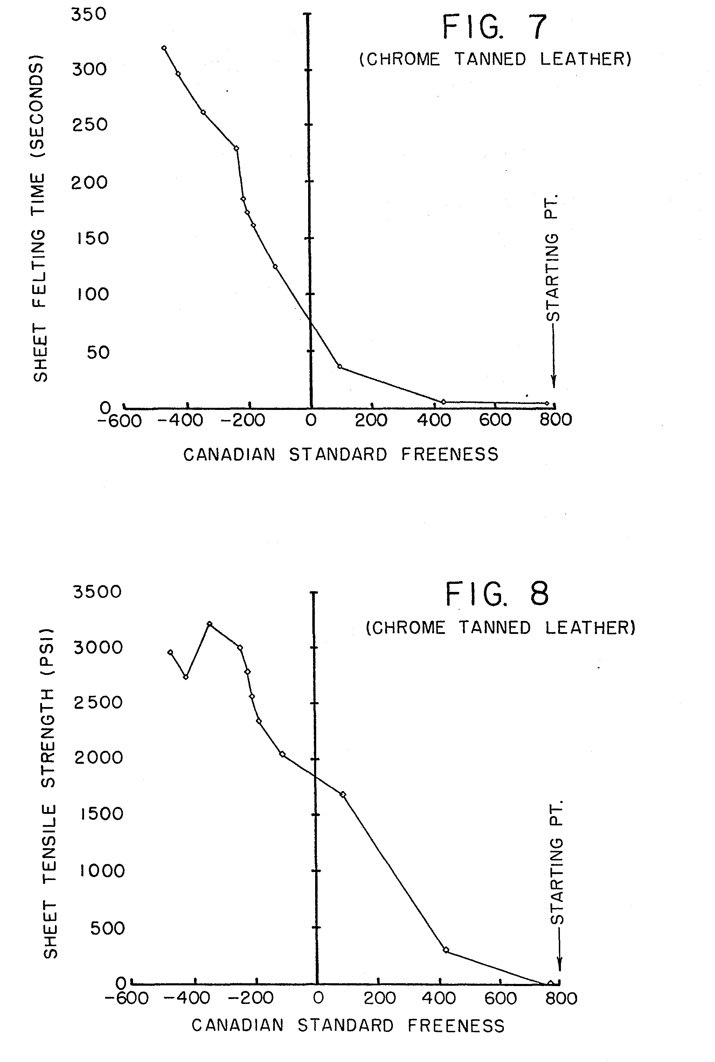

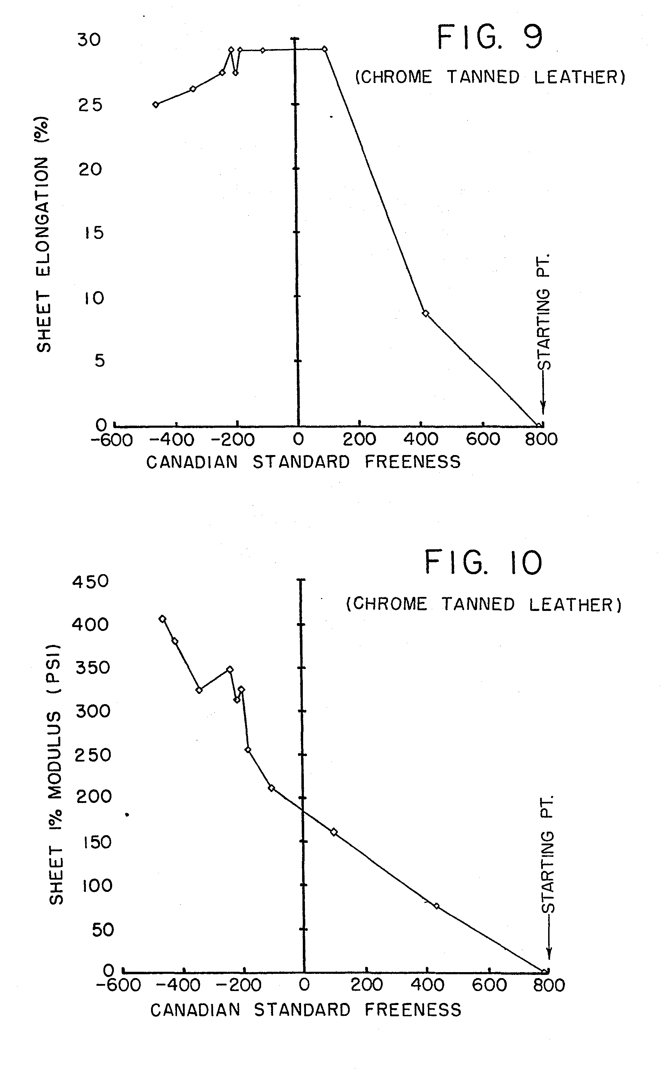

Figures 5 through 11 are graphs of Canadian Standard Freeness of the refined leather fiber vs. (a) number of passes through refiner, (b) felting time, (c) tensile strength, (d) elongation (e) 1% modulus, (f) sheet die "C" tear. These graphs demonstate the criticality and/or unexpected properties produced by fibrillation and in particular a CSF of less than +100 ml or less than the inversion point (CSF about 0ml.).

*86*

## EXAMPLE XXII

### USE OF VEGETABLE TANNED LEATHER SCRAP

The objectives of the tests were to determine if vegetable tanned leather scrap could be refined and converted into leather product in the same manner as chrome tanned scrap. This was accomplished and the conditions used are documented herein.

used in this Example

The vegetable tanned scrap was much more difficult to refine or fibrillate than chrome tanned scrap, e.g., it required 36 passes to reach a CSF of -200ml vs 15 passes for chrome tanned scrap.

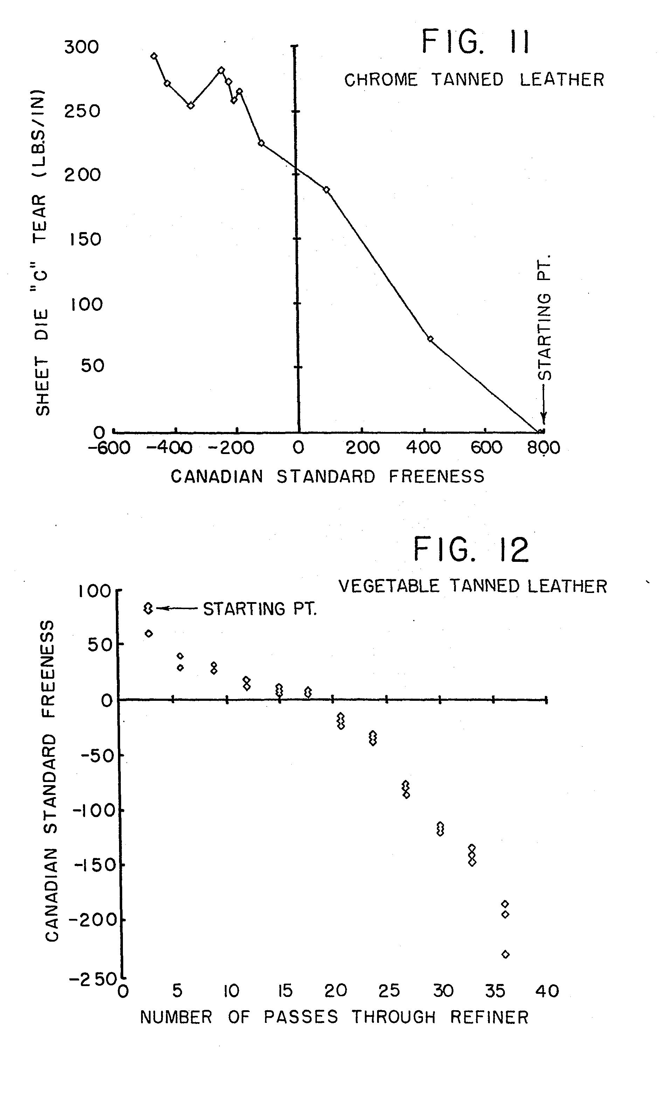

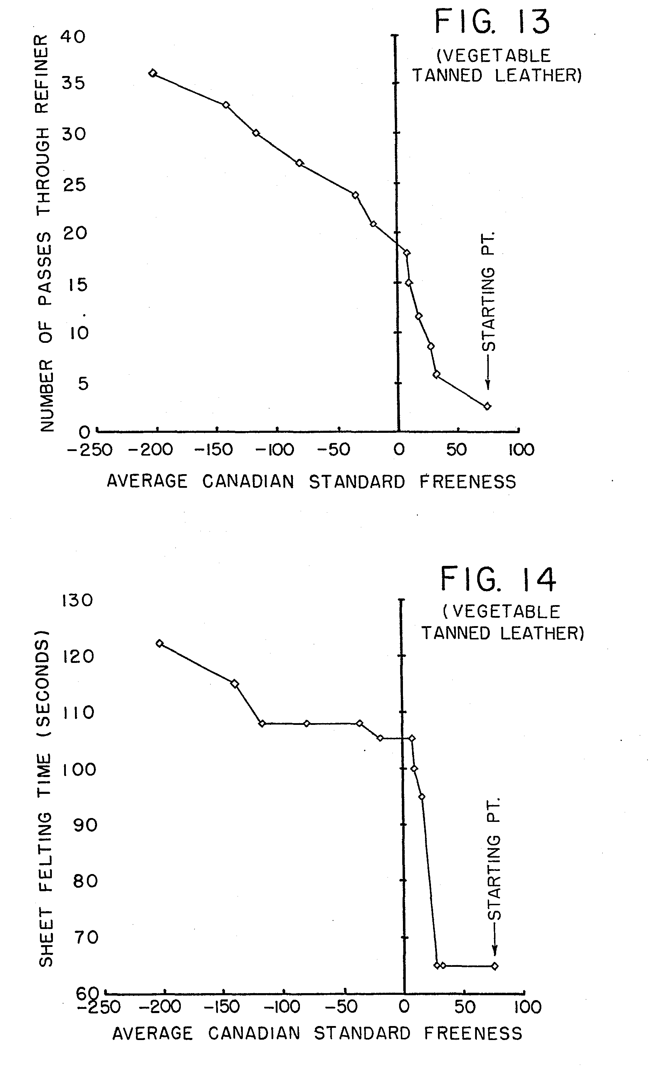

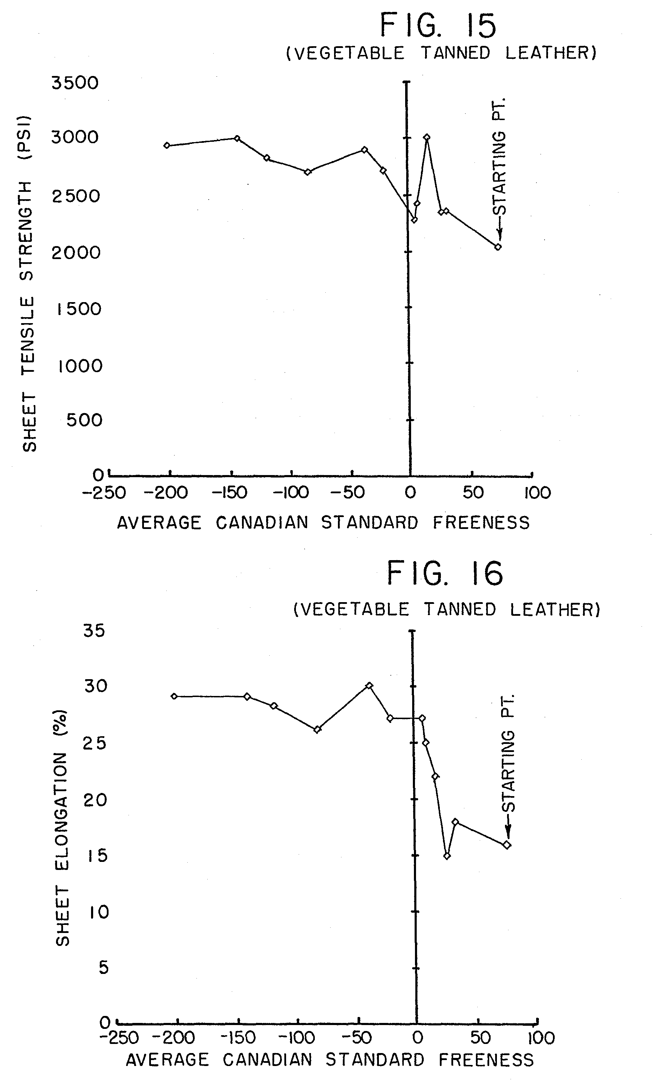

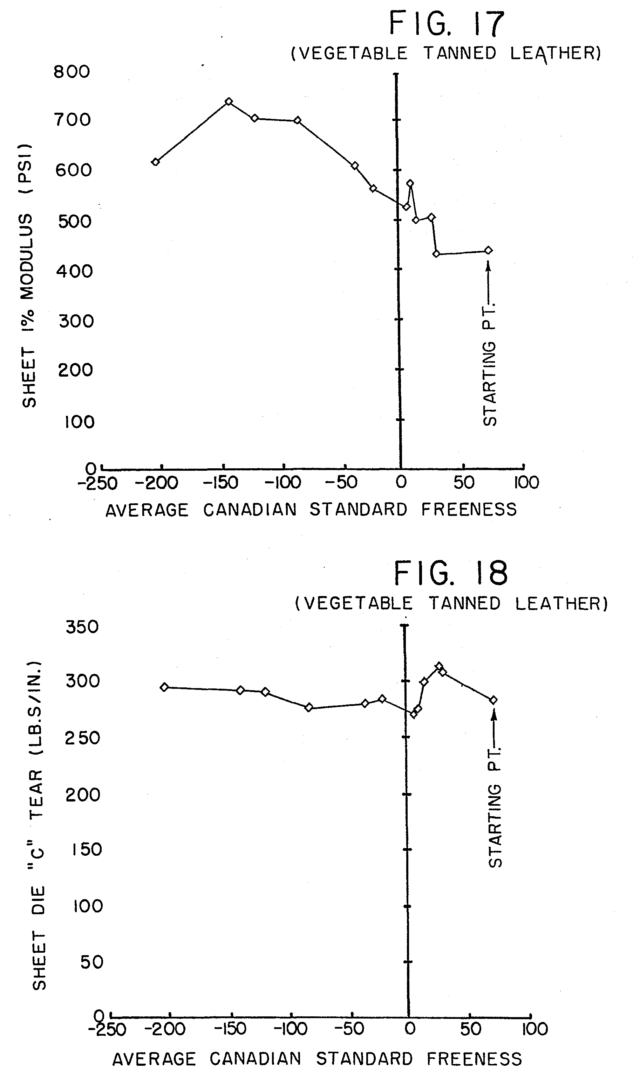

Leather sheets made from refined vegetable tanned scrap showed physical property trends (Figs. 12-18) similar to refined chrome tanned sheets.

### Vegetable Tanned Leather Scrap

Whole hide scraps from die cutting of shoe soles (E.H. Hall Co., Inc. Williamsport, PA) were chopped (single pass) in a Cumberland rotary knife mill. The chopped vegetable tanned scrap had a moisture content of 11.3%. Initial refining charge: 12 lbs. leather scrap (10.6 lbs. dry solids + 138 lbs. water. Calculated slurry solids = 7.1%.

### Refiner

Sprout Waldron (12" single disk) Laboratory Refiner operated at a fixed speed of 2600 rpm. Plate pattern: #12716 - A/AA, Ni-hard closed periphery with sub-surface dams. Feed system: batch -two tank.

### SHEET PREPARATION

#### Composition

| | |
|---|---|
| Fiber Source | Refined Vegetable Tanned Scrap |
| Binder | Airflex 401 (53% Emulsion) |
| Ratio | 70% Fiber/30% Binder |
| Fat Liquoring Agents | None |

## EXAMPLE XXII  (Cont.)

### Forming Conditions

| | |
|---|---|
| Slurry | Aqueous 1.3%/50 g Total Solids |
| Felt | 144 in$^2$/25" Hg/3 min. Vac. Dry |
| Cold Press | about 100 psi/between Test Blotting Paper/90 sec. |
| Moisture Control | Equilibrated 16 hrs. @ room temperature/unrestrained |
| Hot Press | about 100 psi/176ºF/180 sec. |

Figs. 12 through 18 are graphs of Canadian Standard Freeness of the refined leather vs. (a) number of passes through refiner, (b) felting time, (c) tensile strength, (d) elongation, (e) 1% modulus, (f) sheet die "C" tear. These graphs demonstrate the criticality and/or unexpected properties due to fibrillation and in particular a CSF of less than +100 ml or less than the inversion point (CSF about 0ml).

-1-

WHAT IS CLAIMED IS:

1.    A composition consisting essentially of fibrillated leather fibers.

2.    The composition of claim 1, wherein the fibers are chrome tanned leather fibers.

3.    The composition of claim 1, wherein the fibers are vegetable tanned leather fibers.

4.    The composition of claim 1, 2 or 3, wherein the fibers are wet fibrillated leather fibers.

5.    The composition of claim 4, wherein the Canadian Standard Freeness (CSF) of the composition is about +100 ml. or less.

6.    The composition of claim 4, wherein the CSF of the composition is less than the inversion point (about 0.ml).

7.    The composition of claim 4, wherein the CSF of the composition is from about +100 ml to about -800 ml.

-2-

8.    The composition of claim 4, wherein the CSF of the composition is from about -100 ml to about -300 ml.

9.    A composition consisting essentially of leather fibers which appear substantially similar to the fiber depicted in Figure 3 at a magnification of 800.

10.    A reconstituted leather composition consisting essentially of fibrillated leather fibers consolidated together.

11.    A reconstituted leather composition consisting essentially of fibrillated leather fibers bonded together by a binding amount of an effective binder.

12.    A reconstituted leather composition consisting essentially of fibrillated chrome tanned leather fibers bonded together by a binding amount of an effective binder.

13.    A reconstituted leather composition consisting essentially of fibrillated vegetable tanned leather fibers bonded together by a binding amount of an effective binder.

14.    The reconstituted leather composition of claim 11, 12 or 13 wherein the binder is ethylene-vinyl acetate copolymer.

15.   The reconstituted leather composition of claim 11, 12 or 13 wherein the binding amount of binder is from about 10% to 40% based on the dry weight of the leather fibers.

16.   The reconstituted leather composition of claim 15,

a)     having a tensile strength of about 500 to 6,000 psi;

b)     having an ultimate elongation of about 10 to 40%;

c)     requiring a tensile force of about 25 to 2,000 psi to effect a 1% elongation; and

d)     having a Mullens burst of about 200 to 800 lbs.

17.   The reconstituted leather composition of claim 16,

e)     having a water vapor transmission of 50 to 800 $g/m^2/24$ hours;

f)     having a slit tear of 5 to 50 lbs; and

g)     having a stitch tear of 5 to 50 lbs.

18.   The reconstituted leather composition of claim 17,

h)     having a Gurley stiffness of 1 to 50 grams;

i)     having water absorption of 0.25 to 1.50 $grams/cm^3$.

-4-

19.    The reconstituted leather composition of claim 14, wherein the binding amount of binder is from about 10% to 40% based on the dry weight of the leather fibers.

20.    The reconstituted leather composition of claim 19,

    a)    having a tensile leather strength of about 500 to 6,000 psi;

    b)    having an ultimate elongation of about 10% to 40%;

    c)    requiring a tensile force of about 25 to 2,000 psi to effect a 1% elongation; and

    d)    having a Mullens burst of about 200 to 800 lbs.

21.    The reconstituted leather composition of claim 20,

    e)    having a water vapor transmission of 50 to 800 g/m$^2$/24 hours;

    f)    having a slit tear of 5 to 50 lbs; and

    g)    having a stitch tear of 5 to 50 lbs.

22.    The reconstituted leather composition of claim 21,

    h)    having a Gurley stiffness of 1 to 50 grams;

    i)    having water absorption of 0.25 to 1.50 grams/cm$^3$.

-5-

23. A method of preparing reconstituted leather product comprising wet fibrillating leather so as to realize an aqueous slurry containing fibrillated leather fiber, felting the resulting slurry to form a felt, removing the remaining water to realize a dried felt, final pressing the dried felt at a temperature and pressure sufficient to consolidate the fibers to form the reconstitued leather product.

24. A method of preparing a reconstituted leather product comprising wet fibrillating leather so as to realize an aqueous slurry containing fibrillated leather fibers, mixing said slurry with a binding amount of an effective binder, felting the resulting slurry to form a felt, removing the remaining water to realize a dried felt, final pressing the dried felt at a temperature sufficient to fuse said binder.

25. A method of preparing a reconstituted leather product comprising dry chopping pieces of leather, wet fibrillating the resulting leather so as to realize an aqueous slurry containing fibrillated leather fibers, mixing said slurry with a binding amount of an effective binder, felting the resulting slurry to form a felt, removing the remaining water to realize a dried felt, final pressing the dried felt at a temperature sufficient to fuse said binder.

-6-

26. A method of preparing a reconstituted leather product comprising dry chopping pieces of chrome tanned leather, wet fibrillating the resulting dry chopped leather so as to realize an aqueous slurry containing fibrillated leather fibers, mixing said slurry with a binding amount of an effective binder, felting the resulting slurry to form a felt, removing the remaining water to realize a dried felt, final pressing the dried felt at a temperature sufficient to fuse said binder.

27. A method of preparing a reconstituted leather product comprising dry chopping pieces of vegetable tanned leather, wet fibrillating the resulting dry milled leather so as to realize an aqueous slurry containing about 2-15 weight percent of fibrillated leather fibers, mixing said slurry with a binding amount of an ethylene-vinyl acetate copolymer binder, felting the resulting slurry to form a felt containing about 25-40% solids, removing the remaining water to realize a dried felt having about 80-90% solids, final pressing the dried felt at a temperature sufficient to fuse said binder.

28. A method of preparing a reconstituted leather product comprising dry chopping pieces of chrome tanned leather, wet fibrillating the resulting dry milled leather so as to realize an aqueous slurry containing about 2-15 weight percent of fibrillated leather fibers, mixing said slurry with a binding amount of an

-7-

ethylene-vinyl acetate copolymer binder, felting the resulting slurry to form a felt containing about 25-40% solids, removing the remaining water to realize a dried felt having about 80-90% solids, final pressing the dried felt at at temperature sufficient to fuse said binder.

29. The method of claim 23, 24, 25,26, 27 or 28, wherein after final pressing the felt is staked.

30. The method of preparing a reconstituted leather product according to claim 29, wherein said aqueous slurry realized as a result of said wet fibrillating contains about 4-12% fibrillated leather fibers.

31. The method of preparing a reconstituted leather product according to claim 24, 25, 26, 27 or 28, in which said binder is employed in an amount of about 10-40% based on the weight of the leather fibers in said slurry.

32. The method of preparing a reconstituted leather product according to claim 31, wherein said binder is in the form of an aqueous emulsion which is mixed with said slurry.

-8-

33. The method of preparing a reconstituted leather product according to claim 32, in which a fat liquoring agent is applied to the leather fibers.

34. The method of preparing a reconstituted leather product according to claim 33, in which said fat liquoring agent is added to said aqueous slurry.

35. The method of preparing a reconstituted leather product according to claim 34, in which said aqueous slurry is adjusted to about 0.1% to 3.0% solids prior to felting.

36. The method of preparing a reconstituted leather product according to claim 35, wherin the solids content of said slurry is adjusted to about .2% to 1.5% prior to felting.

37. The method of preparing a reconstituted leather product according to claim 36, in which said felt is formed containing about 30% solids.

38. The method of preparing a reconstituted leather product according to claim 35, in which said felt is pressed so as to express free water therefrom and realize a felt containing about 40% to 50% solids.

39. The method of preparing a reconstituted leather product according to claim 38, wherein said pressed felt contains about 45% solids.

40. The method of preparing a reconstituted leather product according to claim 35, wherein drying is effected so as to realize a dried felt containing about 85% solids.

41. The method of preparing a reconstituted leather product according to claim 23, 24, 25, 26, 27 or 28, wherein said dried felt is final pressed at a pressure of abut 250-500 psi and a felt temperature of about 80-225°F.

42. The method of preparing a reconstituted leather product according to claim 41, wherein said dried felt is pressed at a temperature of about 175-190°F.

43. The method of preparing a reconstituted leather product according to claim 23, 24, 25, 26, 27 or 28, wherein said fibrillated leather is wet fibrillated to a Canadian Standard Freeness of about +100ml to -800ml.

FIG. 1

Process flow: CHROME TANNED LEATHER WASTE → DRY COMMINUTING → WET FIBRILLATING → (BINDER, FAT LIQUORING AGENT) mixing → FELT FORMATION → COLD PRESSING → DRYING → HOT PRESSING → STAKING → APPLY PIGMENT → DRYING → APPLY RELEASE COAT → EMBOSSING → HIGHLIGHT DYING → TOP SEAL COATING → RECONSTITUTED LEATHER PRODUCT

1/12

0089029

FIG. IA

## FIG. 2

NON−FIBRILLATED
CHROME  TANNED
LEATHER
(800 X)

## FIG. 3

WET FIBRILLATED
CHROME TANNED
LEATHER
(800 X)

# FIG. 4

RECONSTITUTED LEATHER
OF THIS INVENTION
(UNSTAKED, 5000X)

6/12    0089029

FIG. 5
(CHROME TANNED LEATHER)

FIG. 6
(CHROME TANNED LEATHER)

# FIG. 7
### (CHROME TANNED LEATHER)

# FIG. 8
### (CHROME TANNED LEATHER)

FIG. 9
(CHROME TANNED LEATHER)

FIG. 10
(CHROME TANNED LEATHER)

0089029

# FIG. II

## CHROME TANNED LEATHER

*Y-axis: SHEET DIE "C" TEAR (LBS/IN)*
*X-axis: CANADIAN STANDARD FREENESS*
*STARTING PT.*

# FIG. 12

## VEGETABLE TANNED LEATHER

*STARTING PT.*
*Y-axis: CANADIAN STANDARD FREENESS*
*X-axis: NUMBER OF PASSES THROUGH REFINER*

FIG. 13
(VEGETABLE TANNED LEATHER)

FIG. 14
(VEGETABLE TANNED LEATHER)

0089029

0089029

## FIG. 15
### (VEGETABLE TANNED LEATHER)

Plot: SHEET TENSILE STRENGTH (PSI) vs AVERAGE CANADIAN STANDARD FREENESS, with STARTING PT. indicated.

## FIG. 16
### (VEGETABLE TANNED LEATHER)

Plot: SHEET ELONGATION (%) vs AVERAGE CANADIAN STANDARD FREENESS, with STARTING PT. indicated.

# FIG. 17
## (VEGETABLE TANNED LEATHER)

Y-axis: SHEET 1% MODULUS (PSI)
X-axis: AVERAGE CANADIAN STANDARD FREENESS
STARTING PT.

# FIG. 18
## (VEGETABLE TANNED LEATHER)

Y-axis: SHEET DIE "C" TEAR (LBS/IN.)
X-axis: AVERAGE CANADIAN STANDARD FREENESS
STARTING PT.